Europäisches Patentamt

European Patent Office

Office européen des brevets

(19)

(11) Veröffentlichungsnummer: **0 425 885 B1**

(12) **EUROPÄISCHE PATENTSCHRIFT**

(45) Veröffentlichungstag der Patentschrift: **20.07.94**

(21) Anmeldenummer: **90119816.8**

(22) Anmeldetag: **16.10.90**

(51) Int. Cl.5: **F16F 9/06**, F16F 9/50, B60G 17/015

(54) **Hydropneumatisches Federungssystem.**

(30) Priorität: **28.10.89 DE 3936034**
**20.03.90 DE 4008831**
**01.10.90 DE 4031044**

(43) Veröffentlichungstag der Anmeldung:
**08.05.91 Patentblatt 91/19**

(45) Bekanntmachung des Hinweises auf die
Patenterteilung:
**20.07.94 Patentblatt 94/29**

(84) Benannte Vertragsstaaten:
**BE DE ES FR GB IT NL SE**

(56) Entgegenhaltungen:
DE-A- 2 403 017    DE-A- 2 853 589
DE-A- 3 427 843    DE-A- 3 427 902
DE-A- 3 638 574    DE-A- 3 702 266
DE-A- 3 839 446    FR-A- 2 086 346
GB-A- 337 855    GB-A- 821 697
GB-A- 864 361    GB-A- 1 306 292
GB-A- 2 057 629    GB-A- 2 191 263
NL-A- 7 101 249    US-A- 2 937 034
US-A- 2 959 410    US-A- 3 363 894

(73) Patentinhaber: **HEMSCHEIDT FAHRWERK-TECHNIK GmbH & Co. KG**
**Bornberg 97**
**D-42109 Wuppertal(DE)**

(72) Erfinder: **Runkel, Walter, Dr. Dipl.-Ing.**
**Mendelssohnweg 30**
**W-5600 Wuppertal 2(DE)**

(74) Vertreter: **Patentanwälte Dr. Solf & Zapf**
**Postfach 13 01 13**
**D-42028 Wuppertal (DE)**

Rank Xerox (UK) Business Services
(3. 10/3.09/3.3.3)

**Beschreibung**

Die vorliegende Erfindung betrifft ein hydropneumatisches Federungssystem insbesondere für Kraftfahrzeuge, mit mindestens einer aus einem Zylinder und einem in diesem beweglich geführten Kolben bestehenden Kolbenzylindereinheit, wobei der Kolben innerhalb des Zylinders zwei gegensinnig volumenveränderliche Druckräume abteilt, und zwar einen lastaufnehmenden Zylinderraum und einen gegenüberliegenden, eine Kolbenstange umschließenden Ringraum, wobei die beiden Druckräume hydraulisch voneinander getrennt sowie mit jeweils einem separaten, ein kompressibles Medium enthaltenden Federspeicher verbunden sind, wobei die kompressiblen Medien in den Federspeichern jeweils mit einem pneumatischen Vorspanndruck beaufschlagt sind und jeweils ein in dem jeweiligen Druckraum der Kolbenzylindereinheit herrschender, hydraulischer Druck gegen den entsprechenden pneumatischen Vorspanndruck wirkt, wobei der Kolben der Kolbenzylindereinheit zwei gegenüberliegende Kolbenflächen aufweist, die jeweils mit einem der hydraulischen Drücke beaufschlagt sind, so daß zwei gegensinnig auf den Kolben wirkende Kräfte entstehen, aus deren Differenz sich eine Tragkraft der Kolbenzylindereinheit ergibt.

Hydropneumatische Federungssysteme sind in zahlreichen Veröffentlichungen beschrieben; es seien hier lediglich beispielsweise die DE-A-34 27 843, DE-A-28 53 589 und DE-A-36 13 677 genannt. Bei allen diesen Systemen werden bei Bewegungen einer zu federnden Masse, beispielsweise eines Fahrzeugrades oder einer Fahrzeugachse, ein Kolben und ein Zylinder einer Kolbenzylindereinheit relativ zueinander bewegt, wodurch ein hydraulisches Medium in Strömung versetzt wird, welches auf mindestens einen eine "Kompressionsfeder" bildenden Federspeicher wirkt. Der Federspeicher besteht üblicherweise aus einem Speicherraum zur Aufnahme des verdrängten Hydraulikmediums sowie einem mit einem kompressiblen Medium, insbesondere Gas, gefüllten Federkammer, die über ein Trennelement, insbesondere über einen schwimmend geführten Trennkolben, von dem Speicherraum getrennt ist. Beim Einfedern strömt ein bestimmtes Volumen des Hydraulikmediums in den Speicherraum, wodurch der Trennkolben in Richtung der Federkammer verschoben wird und sich deren Volumen verringert. Durch diese Komprimierung wird ein Anstieg des Druckes des kompressiblen Mediums - im folgenden vereinfacht "pneumatischer Druck" genannt - und damit eine Federwirkung in der Federkammer hervorgerufen, wobei dieser erhöhte Druck über das Hydraulikmedium wieder zum Ausfedern auf die Kolbenzylindereinheit wirkt. Bei derartigen Systemen ist es bisher allenfalls mit sehr großen Federspeichern (großes Volumen des kompressiblen Mediums) sowie mit großen Kolbenzylindereinheiten möglich, zufriedenstellende Federungseigenschaften zu erreichen.

Ein Federungssystem der gattungsgemäßen Art ist aus der FR-A-2 086 346 bzw. der entsprechenden DE-A-2 020 292 bekannt.

Diese Druckschrift beschreibt ein Federungssystem (Abstützsystem) für Kraftfahrzeuge, wobei jede Arbeitszylinderseite bzw. jeder Druckraum eines doppelt wirkenden Arbeitszylinders (Kolbenzylindereinheit) über eine Druckleitung an einen eigenen Druckgeber (Federspeicher) angeschlossen ist. Gemäß der Lehre dieses Dokumentes soll nun eine Beeinflussung des Federungsverhaltens ("unterschiedlich nachgiebige Koppelung der beiden durch den Arbeitszylinder verbundenen Massen") dadurch erreicht werden, daß mindestens in einer der beiden Druckleitungen ein Regelglied angeordnet ist, welches derart als Drossel- oder Regelventil ausgebildet ist, daß der Durchgangsquerschnitt der jeweiligen Druckleitung zwischen dem Arbeitszylinder und dem jeweiligen Druckgeber zwischen Null und einem maximalen Querschnitt veränderbar ist. Diese Maßnahmen zur Beeinflussung der Federcharakteristik sind aufgrund von besonderen Bauteilen (mindestens ein Drossel- oder Regelventil) und der zu deren Anschluß erforderlichen Verbindungs- und Dichtungsstellen konstruktiv aufwendig und folglich teuer sowie sicherlich auch anfällig, was das Auftreten von Störungen betrifft.

Der vorliegenden Erfindung liegt daher die Aufgabe zugrunde, ein hydropneumatisches Federungssystem zu schaffen, welches sich durch wenige und konstruktiv einfach und kompakt ausgebildete Komponenten sowie durch optimale Federungseigenschaften auszeichnet, die vorzugsweise auch leicht an bestimmte Anwendungsfälle anpaßbar sein sollen.

Erfindungsgemäß wird dies durch die Merkmale des Anspruchs 1 erreicht. Vorteilhafte Weiterbildungen der Erfindung sind in den abhängigen Unteransprüchen 2 bis 22 enthalten.

Kern der vorliegenden Erfindung ist demnach, daß bei der gattungsgemäßen Zusammenschaltung einer Kolbenzylindereinheit mit zwei separaten Federspeichern die Federungscharakteristik (Kennlinie) durch Variation mindestens eines der pneumatischen Vorspanndrücke einstellbar ist. Die Erfindung basiert dabei auf der Erkenntnis, daß die Federkennlinie, d.h. die über den Kolbenhub (Federweg) vorhandene Tragkraft F, aus der Differenz der beiden entgegengesetzten Kolbenkräfte $F_1$ und $F_2$ resultiert, die sich ja ebenfalls über den Federweg jeweils gegenläufig ändern. Weiterhin wurde erkannt, daß die Kolbenkräfte $F_1$ und $F_2$ sich aus dem Produkt des jeweiligen hydraulischen Druckes $p_3$ bzw. $p_4$ mal der von diesem beaufschlagten Kolbenfläche ergeben (gemäß der physikalischen Beziehung $F = p \cdot A$) und dabei ja die hydraulischen Drücke von der Höhe der pneumatischen Vorspanndrücke $p_1$, $p_2$ bestimmt werden. Erfindungsgemäß kann somit auf besonders einfache Weise die Federkennlinie beeinflußt werden, indem mindestens einer der beiden pneumatischen Vorspanndrücke verändert wird, d.h. es wird eine Änderung der Verhältnisse $p_1 : p_2$, $p_3 : p_4$ und damit auch $F_1 : F_2$ bewirkt.

Bevor die Erfindung noch genauer erläutert wird, sollen zunächst einige grundsätzliche Überlegungen und Erkenntnisse angeführt werden, die im Zusammenhang mit der Erfindung von Bedeutung sind.

Bei den bekannten hydropneumatischen Federungssystemen der "einfacheren" Art ist einerseits problematisch, daß der pneumatische Druck bzw. die Federkraft des kompressiblen Mediums in dem Federspeicher über den Kolbenhub der Kolbenzylindereinheit nicht konstant ist, sondern bei der Einfederung zu- und beim Ausfedern abnimmt, da innerhalb der Federkammer das Produkt Druck mal Volumen stets konstant ist. Da in Fahrzeug-Federungssystemen aber eine über den Federweg möglichst konstante Federkraft, zumindest aber eine möglichst flache Federkennlinie erwünscht ist, führt dies dazu, daß das Gesamtvolumen der Federkammer sehr groß gewählt werden muß, um über den Federweg nur verhältnismäßig geringe Druckänderungen hervorzurufen. Bei großen Belastungsverhältnissen der Kolbenzylindereinheit zwischen Leerlast und Vollast von beispielsweise 1 : 10 würde dies aber bedeuten, daß das kompressible Medium in der Federkammer auf 1/10 zusammengedrückt werden müßte und hierdurch der erforderliche Verschiebeweg des Trennkolbens sehr groß würde. Da zudem die Tragkraft des Federspeichers für die größtmögliche Belastung der Kolbenzylindereinheit ausgelegt werden muß, muß entweder der pneumatische Druck innerhalb des Federspeichers oder aber die wirksam beaufschlagte, zusammen mit dem hydraulischen Druck für die Tragkraft maßgebende Fläche des Kolbens der Kolbenzylindereinheit sehr groß ausgelegt werden, wobei nachteiligerweise ein hoher Druck zu Abdichtungsproblemen und eine große Kolbenfläche zu einer nachteilig großen Bauform der Kolbenzylindereinheit führt.

Bei derartigen Systemen ist ferner die Tragkraft der Kolbenzylindereinheit gleich dem Produkt pneumatischer Druck des kompressiblen Mediums in der Federkammer mal beaufschlagte Druckfläche des Trennkolbens bzw. Druck des hydraulischen Mediums mal beaufschlagte Druckfläche des Kolbens der Kolbenzylindereinheit, wobei im Falle der bekannten Systeme der pneumatische Druck gleich dem hydraulischen Druck ist. Bei den bekannten Systemen wurde nun aus Sicherheitsgründen eine hohe Tragkraft insbesondere durch eine große Druckfläche von Trennkolben bzw. Kolben erzielt, woraus aber nachteiligerweise wiederum eine große Bauform (Querschnitt) der Komponenten resultiert. Wird demgegenüber anstelle der Druckfläche der Druck entsprechend gesteigert, führt dies zu dem Nachteil, daß das Gesamtvolumen der Federkammer außerordentlich groß sein müßte, um eine möglichst flache Federkennlinie zu erreichen, d.h. damit das gesamte Belastungsverhältnis der Kolbenzylindereinheit mit möglichst geringer Druck- bzw. Volumenänderung von der Federkammer aufgenommen werden kann. Eine Erhöhung des pneumatischen Druckes kann aber auch dazu führen, daß das Produkt Druck mal Volumen die Gefahrengrenze von 200 bar x Liter übersteigt, wodurch dann aber der Federspeicher insbesondere in Kraftfahrzeugen ein erhöhtes Sicherheitsrisiko darstellen würde.

Da nun in einer vorteilhaften Ausgestaltung der Erfindung der hydraulische Druck höher als der pneumatische Druck ist, kann vorteilhafterweise die Druckfläche des die Last aufnehmenden Kolbens der Kolbenzylindereinheit kleiner und damit die Kolbenzylindereinheit selbst kompakter ausgebildet werden. Ferner kann bei einer bevorzugten Verwendung eines Kolbenspeichers der Trennkolben aufgrund der Erfindung mit einer vereinfachten "Öldichtung" anstelle der bisher erforderlichen, aus mindestens drei bis fünf Einzeldichtungen bestehenden "Gasdichtung" ausgestattet werden, da dem Druck des kompressiblen Mediums, insbesondere Druckluft, der höhere Druck des Hydraulikmediums entgegensteht. Auch dies trägt zu der angestrebten, kompakten Bauform bei, da der Trennkolben mit nur einer Umfangsdichtung und daher mit wesentlich kürzerer, axialer Länge ausgebildet werden kann. Dabei braucht diese Dichtung vorteilhafterweise auch nur für den Differenzdruck zwischen dem pneumatischen und dem hydraulischen Druck ausgelegt zu sein.

Die beschriebene Druckdifferenz wird erfindungsgemäß dadurch geschaffen, daß der Trennkolben als Druckwandler mit zwei unterschiedlich großen Druckflächen ausgebildet ist. So ist die von dem pneumatischen Druck beaufschlagte, erste Druckfläche erfindungsgemäß größer als die gegenüberliegende, von dem hydraulischen Druck beaufschlagte, zweite Druckfläche. Dabei wird der Trennkolben dennoch von beiden Seiten her mit einer gleichen Kraft beaufschlagt, wobei die Kraft jeweils gleich dem Produkt Druck mal beaufschlagte Druckfläche ist.

Es ist weiterhin besonders vorteilhaft, wenn die Bewegung des Kolbens in dem Zylinder über das verdrängte Hydraulikmedium mit einem bestimmten Weg-Übersetzungsverhältnis (positiv = Übersetzung oder negativ = Untersetzung) auf den Trennkolben übertragen wird. Dies bedeutet beispielsweise, daß ein bestimmter Hub des Kolbens der Kolbenzylindereinheit nur einen geringeren Hub des Trennkolbens bewirkt (Untersetzung). Hierdurch kann vorteilhafterweise bei geringem Gesamtvolumen des kompressiblen Mediums eine sehr flache Federkennlinie sowie ein großes Lastverhältnis erreicht werden. Das geringe Gesamtvolumen trägt in Verbindung mit dem vergleichsweise geringen Druck der Federkammer zu einer außerordentlich hohen Sicherheit bei; so kann erfindungsgemäß stets gewährleistet werden, daß das Produkt Druck mal Volumen unterhalb des oben genannten Grenzwertes bleibt. Erfindungsgemäß kann somit über Variation des Übersetzungsverhältnisses die Federkennlinie abgestimmt werden.

In einer besonders vorteilhaften Ausführungsform der Erfindung ist die pneumatische Federkammer zusammen mit dem Trennkolben als externer "Gasfederspeicher" ausgebildet, d.h. von der Kolbenzylindereinheit räumlich getrennt angeordnet. Hierdurch kann einerseits die Kolbenzylindereinheit selbst sehr kompakt ausgebildet sein, und andererseits kann der Gasfederspeicher vorteilhafterweise an einer Stelle, beispielsweise an einem Fahrzeugrahmen, angeordnet werden, wo mehr Platz zur Verfügung steht und wo er auch gegen mechanische Einwirkungen geschützt ist. Zudem kann der Federspeicher auch gegen äußere Temperatureinflüsse, wie Sonneneinstrahlung, geschützt werden, die unter Umständen einen negativen Einfluß auf die Federcharakteristik hätten. Der externe Federspeicher ist hierbei über hydraulische Leitungsverbindungen mit der Kolbenzylindereinheit verbunden.

Aufgrund der erfindungsgemäß sehr flachen Federkennlinie ist es weiterhin besonders vorteilhaft, wenn die Kolbenzylindereinheit mit einer in Ein- und/oder Ausfederungsrichtung wirkenden, insbesondere hydraulischen Endlagen-Stoßdämpfung ausgestattet ist. Hierdurch kann durch die flache Federkennlinie ein sehr hoher Federungskomfort erreicht werden, ohne daß die Kolbenzylindereinheit allzu leicht in ihre mechanischen Endanschläge zusammengeschoben werden könnte. Hierdurch werden erfindungsgemäß harte Stöße vermieden.

Indem die Kolbenzylindereinheit zwei von dem Kolben abgeteilte Druckräume besitzt, die hydraulisch voneinander getrennt und mit jeweils einem separaten Federspeicher verbunden sind, sind folglich zwei getrennte, mit jeweils einem hydraulischen Druck gegen jeweils einen pneumatischen Druck wirkende Hydraulik-Kreisläufe gebildet, wobei in mindestens einem, insbesondere aber in beiden Kreisläufen vorzugsweise der hydraulische Druck größer als der pneumatische Druck ist. Dabei ist es besonders vorteilhaft, wenn einer der beiden Druckräume mit seinem verbundenen Federspeicher einen geschlossenen, volumengesteuerten Hydraulik-Kreislauf bildet, während der jeweils andere Druckraum mit seinem verbundenen Federspeicher einen lastgesteuerten Hydraulik-Kreislauf bildet, der insbesondere über eine Nivellierventil-Anordnung wahlweise mit einer Druckleitung oder einer Tankleitung eines Hydrauliksystems verbindbar ist.

Durch diese erfindungsgemäße Ausgestaltung ist es möglich, durch geeignete Wahl der Höhe des jeweiligen pneumatischen Vorspanndruckes der kompressiblen Medien in den einzelnen Federspeichern den Kolben der Kolbenzylindereinheit auf seinen beiden Kolbenflächen mit praktisch beliebigen, vorzugsweise unterschiedlichen, hydraulischen Drücken zu beaufschlagen. Hierbei entstehen zwei gegensinnige Kolbenkräfte $F_1$ und $F_2$ jeweils aus dem Produkt hydraulischer Druck mal von diesem beaufschlagte Kolbenfläche. Erfindungsgemäß ergibt sich somit die Tragkraft F der Kolbenzylindereinheit aus der Differenz dieser beiden gegensinnigen Kolbenkräfte; es gilt die Gleichung $F = F_1 - F_2$.

Da nun die beiden Druckräume der Kolbenzylindereinheit bei den Federungsbewegungen gegensinnig volumenveränderlich sind, wirken auch die beiden Federspeicher gegenläufig, d.h. wenn in dem einen Federspeicher das kompressible Medium komprimiert wird (pneumatischer Druck steigt), wird in dem anderen Federspeicher das kompressible Medium entspannt (pneumatischer Druck sinkt). Dadurch läßt sich für den dynamischen Federungsbetrieb eine Federkennlinie derart einstellen, daß einerseits zwar ein hoher Federungskomfort erreicht werden kann, sich andererseits aber sogar bei geeigneter Auslegung bzw. Wahl der Systemgrößen vorteilhafterweise eine Dämpfung der Hydraulikströmung erübrigen kann. Dies liegt daran, daß sich die beiden Kolbenkräfte $F_1$ und $F_2$ jeweils derart ändern, daß der Kolben praktisch automatisch vor Erreichen seiner Endlagen "abgebremst" wird.

Zudem ist durch die gegenläufig wirkenden Federspeicher das erfindungsgemäße System vorteilhafterweise außerordentlich temperaturunempfindlich, da sich ja bei Temperaturänderungen in beiden Federspeichern der pneumatische Vorspanndruck im zumindest annähernd gleichen Verhältnis ändert, so daß sich diese Änderungen praktisch von selbst kompensieren.

Es ist besonders vorteilhaft, wenn zumindest der Federspeicher des volumengesteuerten Kreislaufs als Kolbenspeicher mit einem in einem Zylindergehäuse schwimmend geführten Trennkolben ausgebildet ist, wobei der Trennkolben einen hydraulisch mit dem jeweiligen Druckraum der Kolbenzylindereinheit verbundenen Speicherraum von einer mit dem kompressiblen Medium gefüllten Federkammer trennt. Dabei erfolgt dann erfindungsgemäß bei Änderung der statischen Last eine Nivellierung der Kolbenzylindereinheit auf ein Soll-Niveau anhand der zu dem jeweiligen Niveau proportionalen Stellung des Trennkolbens des volumengesteuerten Federspeichers. Dies ist insbesondere dann von besonderem Vorteil, wenn die Federungsbewegungen der Kolbenzylindereinheit über das Hydraulikmedium mit einer insbesondere negativen Weg-Übersetzung, d.h. mit einer Untersetzung von beispielsweise 2 : 1 bis 10 : 1, insbesondere ca. 5 : 1, auf den Trennkolben übertragen werden. Hierdurch reicht nämlich aufgrund des geringen Hubs des Trennkolbens zum Erfassen der Trennkolben-Stellung ein sehr kleiner und damit preiswerter Weggeber aus. Bei der bevorzugten Ausbildung der Federspeicher als gesonderte, von der Kolbenzylindereinheit unabhängige Komponenten ist zudem von Vorteil, daß der Weggeber zusammen mit dem Federspeicher in einem vor äußeren Einflüssen, wie Verschmutzung, Temperaturänderungen und dergleichen, geschützten Bereich z.B. eines Kraftfahrzeugs untergebracht sein kann. Eine Steuereinrichtung steuert nun erfindungsgemäß anhand der Ausgangssignale des die Trennkolben-Stellung erfassenden Weggebers die Nivellierventil-Anordnung derart an, daß durch Zuführen oder Ablassen von Hydraulikmedium in den oder aus dem lastgesteuerten Kreislauf die Kolbenzylindereinheit auf ein vorbestimmtes Sollniveau eingestellt wird. Bei Erreichen dieses Sollniveaus steht auch der Trennkolben des volumengesteuerten Federspeichers seinerseits wieder in seiner Sollstellung, so daß folglich aufgrund der erfindungsgemäßen Nivellierung im statischen Zustand einerseits der Druck innerhalb des volumengesteuerten Kreislaufs und daher andererseits auch die eine der beiden Kolbenkräfte, nämlich $F_2$, stets konstant sind - vorausgesetzt natürlich, daß der zugehörige pneumatische Vorspanndruck ebenfalls konstant bleibt. Demgegenüber ändert sich nun aber bei unterschiedlichen Lasten der im nivellierten Zustand innerhalb des lastgesteuerten Kreislaufs herrschende Druck und damit auch die Kolbenkraft $F_1$. Die Folge hiervon ist nun, daß vorteilhafterweise das Lastverhältnis des die Last aufnehmenden Federspeichers des lastgesteuerten Kreislaufs gegenüber dem Lastverhältnis der Kolbenzylindereinheit wesentlich reduziert werden kann. Dies wird durch folgendes Zahlenbeispiel deutlich. Hierbei bedeuten:

$F$ = Last bzw. Tragkraft der Kolbenzylindereinheit
$F_1$ = durch den hydraulischen Druck des lastgesteuerten Kreislaufs erzeugte Kolbenkraft
$F_2$ = durch den hydraulischen Druck des volumengesteuerten Kreislaufs erzeugte, im statischen Zustand konstante Kolbenkraft.

Fall A: $F = 60$ kN, $F_2 = 15$ kN
$F_1 = F + F_2$ (da $F = F_1 - F_2$)
$F_1 = 75$ kN

Fall B: $F = 10$ kN, $F_2 = 15$ kN
$F_1 = F + F_2$
$F_1 = 25$ kN

Hieraus folgt ein Lastverhältnis der Kolbenzylindereinheit von 60/10 = 6, während das Lastverhältnis des lasttragenden Federspeichers lediglich 75/25 = 3 beträgt.

Durch die Erfindung ergibt sich weiterhin der Vorteil, daß auch der sogenannte Stoßgrad, d.h. das Verhältnis $p_{max}/p_{stat}$ zwischen dem maximalen Druck im eingefederten Zustand und dem Druck in der statischen Lage, mit einem stetigen Verlauf über das gesamte Lastverhältnis nahezu konstant ist.

Weitere vorteilhafte Ausgestaltungsmerkmale der Erfindung sind in den Unteransprüchen und der folgenden Beschreibung enthalten.

Anhand der Zeichnung soll im folgenden die Erfindung beispielhaft näher erläutert werden.

Hierzu ist darauf hinzuweisen, daß die Ausführungen der Figuren 1 bis 4 von der im Anspruch 1 beanspruchten Erfindung nicht mehr umfaßt sind. Es zeigen:

Fig. 1 eine erste Ausführungsform eines Federungssystems mit einer Kolbenzylindereinheit und einem externen Federspeicher in stark vereinfachten, prinzipiellen Längsschnitt-Darstellungen,

Fig. 2 eine Ansicht analog zu Fig. 1 einer zweiten Ausführungsform,

Fig. 3 eine vergrößerte Detaildarstellung in Richtung des Pfeils III in Fig. 2,

Fig. 4 eine Ausführungsform eines Federungssystems mit einem in die Kolbenzylindereinheit integrierten Federspeicher wiederum in vereinfachter Längsschnitt-Darstellung,

Fig. 5 eine Ausführungsform eines erfindungsgemäßen Federungssystems mit einer Kolbenzylindereinheit und zwei externen Federspeichern in stark vereinfachten, prinzipiellen Längsschnitt-Darstellungen,

Fig. 6 eine Ansicht analog zu Fig. 5 einer weiteren Ausführungsform der Erfindung,

Fig. 7 ein Hydraulik-Schaltbild eines erfindungsgemäßen Federungssystems für ein vierachsiges Radfahrzeug, (z.B.einen Lastkraftwagen),d.h. mit acht Kolbenzylindereinheiten sowie mit hydraulischer Dämpfung,

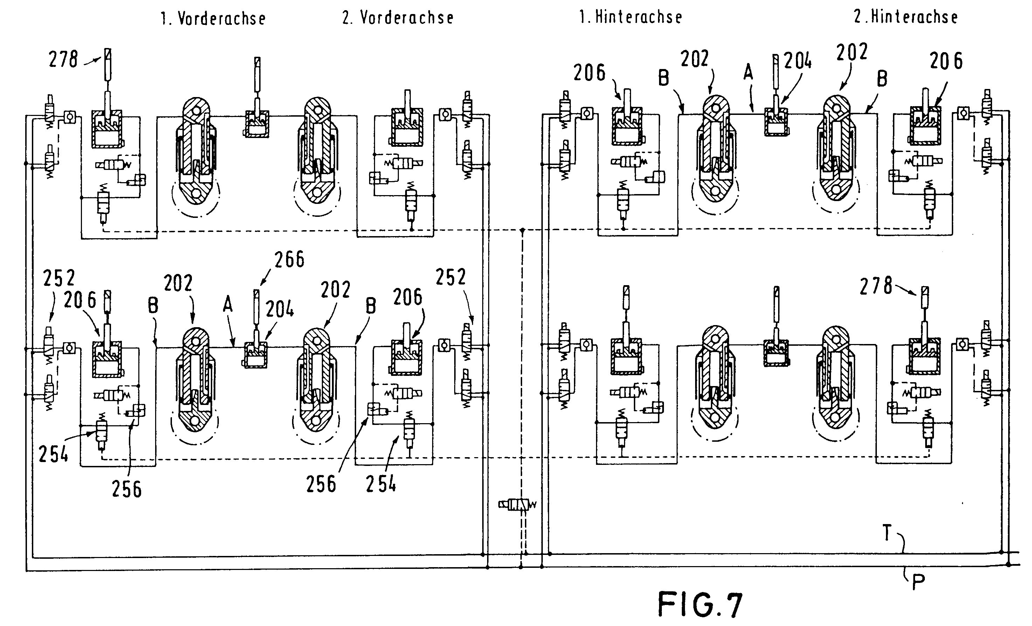

Fig. 8
ein Hydraulikschaltbild analog zu Fig. 7, jedoch ohne Dämpfung,

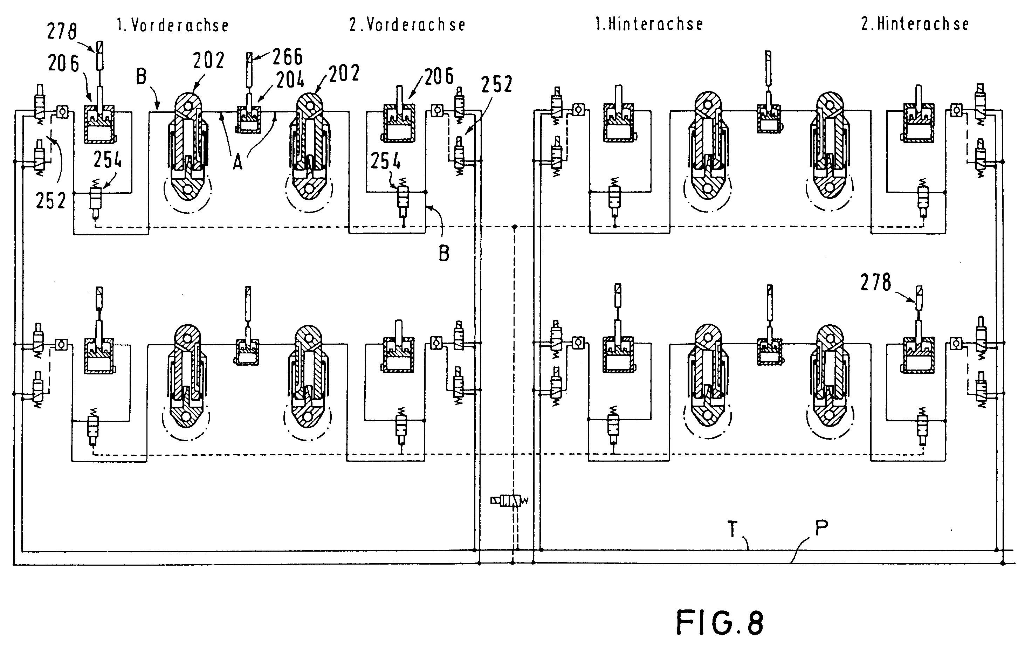

Fig. 9
ein Hydraulik-Schaltbild des erfindungsgemäßen Federungssystems ebenfalls für ein vierachsiges Fahrzeug in einer zu Fig. 7 und 8 alternativen Beschaltung,

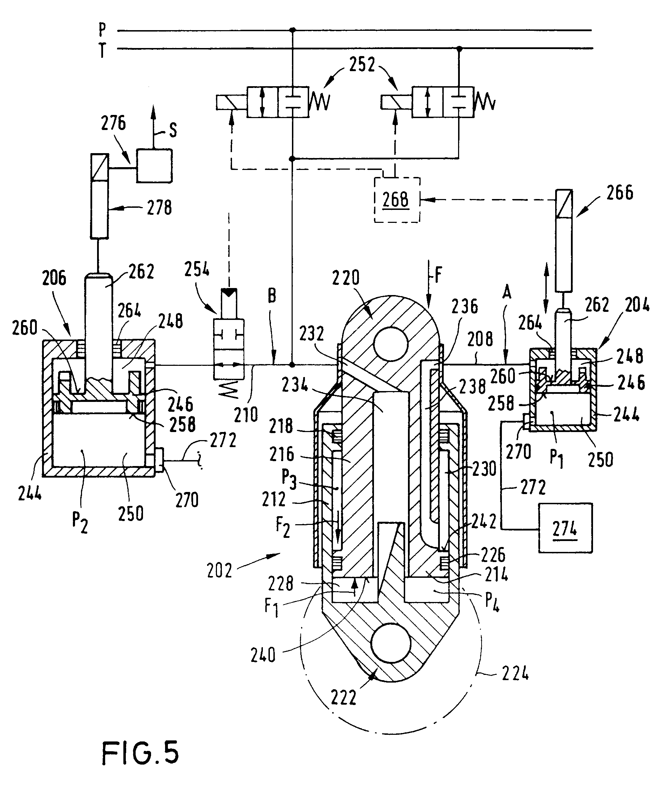

Fig. 10
eine Weiterbildung der in Fig. 5 dargestellten Ausführungsform des erfindungsgemäßen Federungssystems,

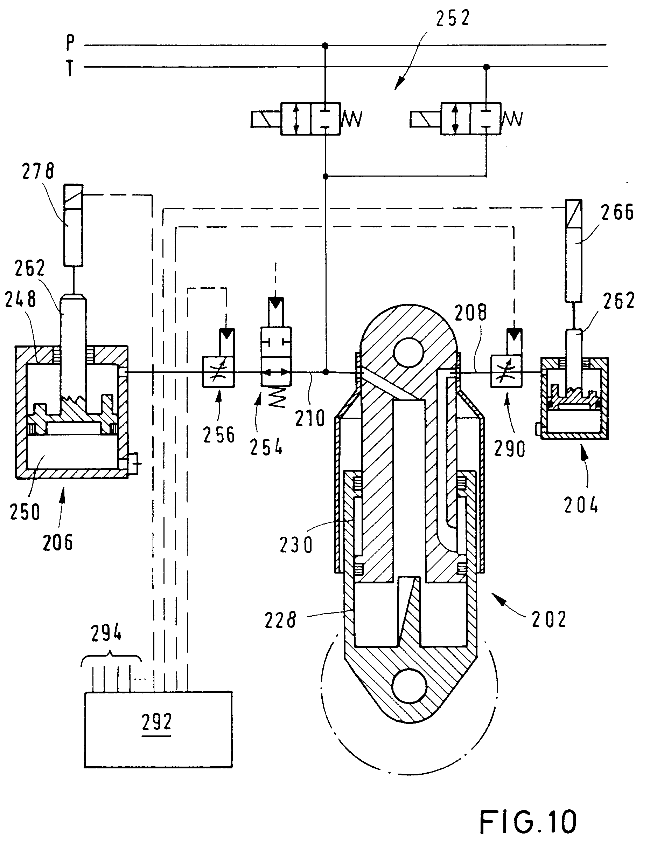

Fig. 11 und 12
Federkennlinien-Diagramme zur Erläuterung der Wirkungsweise der Ausführungsform nach Fig. 10

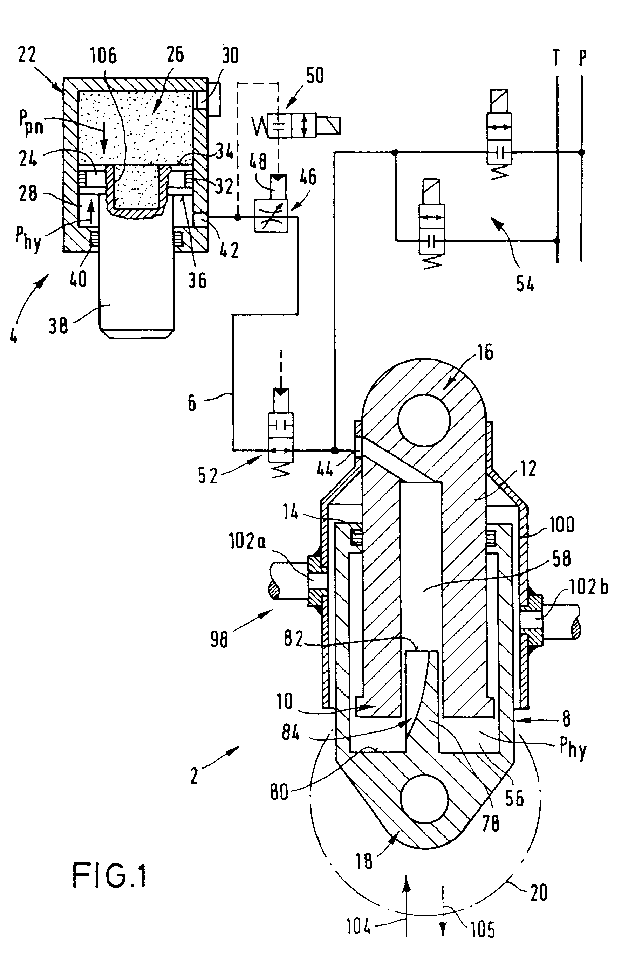

In den Figuren 1 bis 4 einerseits und andererseits in den Figuren 5 bis 10 sind jeweils gleiche Teile mit den gleichen Bezugsziffern bezeichnet.

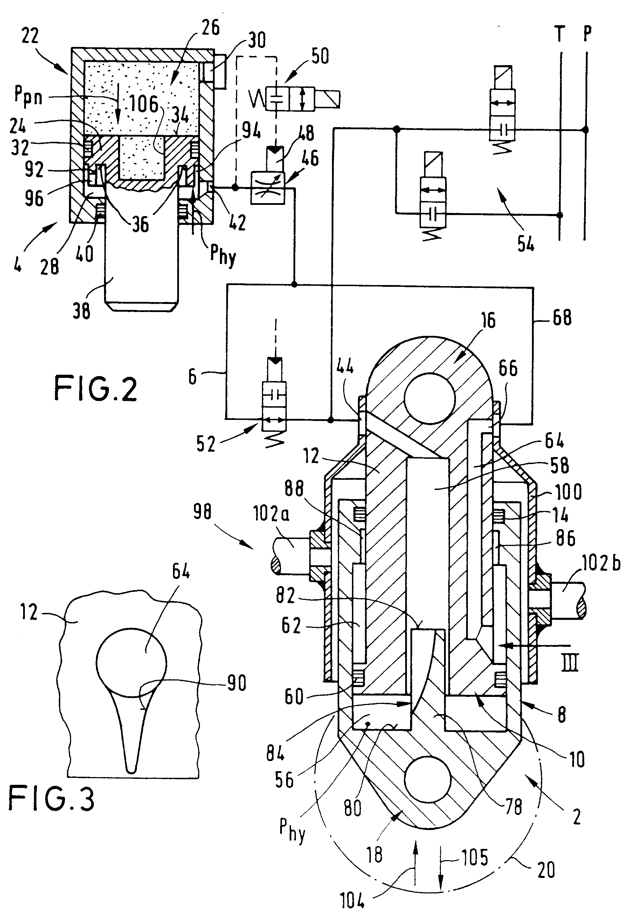

Wie sich zunächst aus den Fig. 1 und 2 ergibt, besteht das Federungssystem zumindest aus einer hydraulischen Kolbenzylindereinheit 2 und einem mit dieser zusammenwirkenden, insbesondere pneumatischen Federspeicher 4, wobei in diesen Ausführungsformen nach Fig. 1 und 2 der Federspeicher 4 und die Kolbenzylindereinheit 2 unabhängig, räumlich getrennt angeordnet und über eine hydraulische Leitungsverbindung 6 miteinander verbunden sind.

Die Kolbenzylindereinheit 2 besteht aus einem Zylinder 8, in dem ein Kolben 10 axialbeweglich geführt ist. Der Kolben 10 ist mechanisch mit einer Kolbenstange 12 verbunden, die gegen den Zylinder 8 über eine Umfangsdichtung 14 abgedichtet nach außen geführt ist. An ihrem freien, nach außen geführten Ende besitzt die Kolbenstange 12 ein Anschlußstück 16, und auch der Zylinder 8 weist an seinem gegenüberliegenden, geschlossenen Ende ein Anschlußstück 18 auf. Vorzugsweise ist das Anschlußstück 16 der Kolbenstange 12 an einer "gefederten Masse", beispielsweise einem Fahrzeugrahmen, befestigbar, während das Anschlußstück 18 des Zylinders 8 mit einer "ungefederten Masse", insbesondere einem nur strichpunktiert angedeuteten Fahrzeugrad 20, verbindbar ist.

Der Federspeicher 4 besitzt ein Zylindergehäuse 22, in dem ein Trennkolben 24 schwimmend, d.h. freibeweglich geführt ist. Dieser Trennkolben 24 trennt innerhalb des Zylindergehäuses 22 eine mit einem kompressiblen Medium, insbesondere Druckluft, gefüllte Federkammer 26 von einem Ausgleichsraum 28. Vorteilhafterweise besitzt der Federspeicher 4 zudem einen in die Federkammer 26 mündenden Füllanschluß 30. Der Trennkolben 24 ist über eine Umfangsdichtung 32 gegen die Innenwandung des Zylindergehäuses 22 abgedichtet.

Hierbei sind nun die Kolbenzylindereinheit 2 und der Ausgleichsraum 28 mit einem Hydraulikmedium gefüllt, so daß bei Bewegungen des Kolbens 10 ein entsprechendes Volumen des Hydraulikmediums zwischen dem Zylinder 8 und dem Ausgleichsraum 28 des Federspeichers 4 hin- und herströmt. Hierdurch erfolgt in an sich bekannter Weise auch eine Verschiebung des Trennkolbens 24 gegen die pneumatische Federwirkung des in der Federkammer 26 enthaltenen Mediums. Dabei beaufschlagt das kompressible Medium den Trennkolben 24 von der Seite der Federkammer 26 her mit einem pneumatischen Druck $p_{pn}$, während das Hydraulikmedium in dem Ausgleichsraum 28 mit einem Druck $p_{hy}$ gegen den Trennkolben 24 wirkt.

Der pneumatische Druck $p_{pn}$ ist kleiner, und zwar vorzugsweise wesentlich kleiner, als der hydraulische Druck $p_{hy}$. Hierzu ist der Trennkolben 24 als Druckwandler mit zwei unterschiedlich großen Druckflächen 34 und 36 ausgebildet. Die der Federkammer 26 zugekehrte, von dem pneumatischen Druck $p_{pn}$ beaufschlagte, erste Druckfläche 34 ist dabei größer als die gegenüberliegende, von dem hydraulischen Druck $p_{hy}$ beaufschlagte zweite Druckfläche 36. Um diese Flächendifferenz zu gewährleisten, ist der Trennkolben 24 mit einer Trennkolbenstange 38 verbunden, die sich durch den Ausgleichsraum 28 hindurch sowie über eine Umfangsdichtung 40 abgedichtet aus dem Zylindergehäuse 22 nach außen erstreckt. Somit ist der Ausgleichsraum 28 ringförmig zwischen dem Zylindergehäuse 22 und der Trennkolbenstange 38 angeordnet. Über eine Variation des Verhältnisses zwischen dem Innenquerschnitt des Zylindergehäuses 22 und dem Querschnitt der Trennkolbenstange 38 läßt sich hierbei erfindungsgemäß auch das Druckverhältnis $p_{pn} : p_{hy}$ verändern.

Vorteilhafterweise wird nun weiterhin die Bewegung des Kolbens 10 in dem Zylinder 8 über das Hydraulikmedium insbesondere mit einer Weg-Untersetzung (negative Übersetzung) auf den Trennkolben 24 übertragen. Dies bedeutet, daß ein bestimmter Hub des Kolbens 10 einen nur geringeren Hub des Trennkolbens 24 verursacht. Konstruktiv wird dies dadurch erreicht, daß die Querschnittsfläche der Kolbenstange 12, die bei der Kolbenbewegung für das Volumen des verdrängten Hydraulikmediums maßgebend ist, kleiner als die Querschnittsfläche des Ausgleichsraums 28 ist. Da das aus der Kolbenzylindereinheit 2 verdrängte Volumen gleich Kolbenweg mal Querschnittsfläche der Kolbenstange 12 und das von dem Ausgleichsraum 28 aufgenommene Volumen gleich Querschnittsfläche des Ausgleichsraums 28 mal Verschiebeweg des Trennkolbens 24 ist, folgt hieraus, daß der Trennkolben 24 einen geringeren Weg als der Kolben 10 zurücklegt. Hierdurch wird vorteilhafterweise eine sehr flache Federkennlinie des Federspeichers 4 realisiert. Es ist jedoch ebenfalls möglich, eine positive Übersetzung oder ein Übersetzungsverhältnis 1 : 1 zu wählen, um die Federkennlinie auf den jeweiligen Anwendungsfall abzustimmen.

Wie bereits erwähnt, ist in den Ausführungen nach Fig. 1 und 2 der Federspeicher 4 von der Kolbenzylindereinheit 2 getrennt angeordnet. Dabei ist ein in den Ausgleichsraum 28 mündender Anschluß 42 des Zylindergehäuses 22 über die externe Leitungsverbindung 6 mit einem Anschluß 44 der Kolbenzylindereinheit 2 verbunden. Zudem ist vorzugsweise in der externen Leitungsverbindung 6 ein insbesondere lastabhängig einstellbares Dämpfungsventil 46 angeordnet. Dieses Dämpfungsventil 46 besitzt ein Verstellglied 48, welches über ein Schaltventil 50 mit dem jeweils anstehenden hydraulischen Druck $P_{hy}$ beaufschlagbar ist. Ferner ist vorteilhafterweise in der Leitungsverbindung 6 auch ein Absperrventil 52 angeordnet, mit dem erfindungsgemäß die Federwirkung "abgeschaltet", d.h. die Kolbenzylindereinheit 2 blockiert werden kann.

Weiterhin ist vorteilhafterweise an dem Anschluß 44 der Kolbenzylindereinheit 2 auch eine Nivellierventilanordnung 54 angeschlossen, die - wie aus der Zeichnung eindeutig nachvollzogen werden kann - derart ausgebildet ist, daß die Kolbenzylindereinheit 2 wahlweise mit einer Druckleitung P oder einer Rücklaufleitung T beispielsweise einer Fahrzeughydraulik verbindbar ist.

In der Ausführung nach Fig.1 ist der Kolben 10 als in einem Zylinderraum 56 geführter Tauchkolben (Plunger) ausgebildet. Dabei ist der Zylinderraum 56 über einen axial durch den Kolben 10 sowie durch die Kolbenstange 12 hindurch verlaufenden Kanal 58 mit dem im nach außen geführten Endbereich der Kolbenstange 12 angeordneten Anschluß 44 verbunden.

In der Ausführungsform nach Fig. 2 ist der Kolben 10 über mindestens eine Umfangsdichtung 60 gegen den Zylinder 8 abgedichtet und teilt hierdurch den der Kolbenstange 12 gegenüberliegenden Zylinderraum 56 von einem die Kolbenstange 12 umschließenden Ringraum 62 ab. Dabei ist der Zylinderraum 56 wiederum über den axialen Kanal 58 der Kolbenstange 12 mit dem bereits erwähnten Anschluß 44 verbunden. Andererseits ist auch der Ringraum 62 über einen axialen Kanal 64 mit einem ebenfalls vorzugsweise im nach außen geführten Endbereich der Kolbenstange 12 angeordneten Anschluß 66 verbunden. Dieser Anschluß 66 des Ringraums 62 ist dabei einerseits über das Absperrventil 52 mit dem Anschluß 44 des Zylinderraumes 56 sowie andererseits auch über das Dämpfungsventil 46 mit dem Anschluß 42 des Zylindergehäuses 22 bzw. des Ausgleichsraums 28 des Federspeichers 4 über eine externe Leitungsverbindung 68 verbunden.

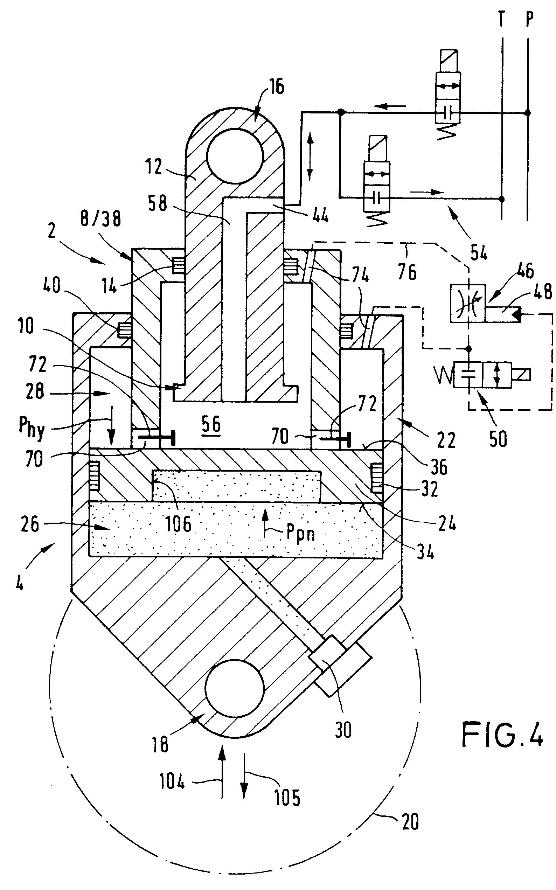

In der Ausführungsform nach Fig. 4 sind die Kolbenzylindereinheit 2 und der Federspeicher 4 vorteilhafterweise zu einer Einheit zusammengefaßt. Dabei sind dennoch gleiche bzw. gleichwirkende Teile mit den gleichen Bezugsziffern wie in Fig. 1 und 2 bezeichnet. Das Zylindergehäuse 22 des Federspeichers 4 bildet hier ein Teil der Kolbenzylindereinheit 2, wobei die Trennkolbenstange 38 hier hohl ausgebildet ist und den Zylinder 8 der Kolbenzylindereinheit 2 bildet. Bei dieser Ausführung ist dann der Zylinderraum 56 entweder intern mit dem Ausgleichsraum 28, der die Trennkolbenstange 38 bzw. den Zylinder 8 ringförmig umschließt, verbunden, wozu der Zylinder 8 mindestens eine radiale Strömungsöffnung 70 im an den Trennkolben 24 angrenzenden Bereich seiner Wandung aufweist. Dabei kann vorzugsweise in der bzw. jeder Strömungsöffnung 70 ein Dämpfungsventil 72 angeordnet sein. Alternativ hierzu können der Zylinder 8 und das Zylindergehäuse 22 jeweils einen Anschluß 74 für eine externe Leitungsverbindung 76 aufweisen, die in Fig. 4 gestrichelt eingezeichnet ist. In dieser externen Leitungsverbindung 76 kann dann vorteilhafterweise das oben bereits erwähnte, insbesondere lastabhängig einstellbare Dämpfungsventil 46 angeordnet sein. Hierbei ist die Leitungsverbindung 76 flexibel ausgestaltet.

Schließlich ist zu der Ausführungsform nach Fig. 4 noch zu erwähnen, daß hier das Anschlußstück 18 anstatt an dem Zylinder 8 an dem Zylindergehäuse 22 angeordnet ist. Außerdem dient hier der über den axialen Kanal 58 der Kolbenstange 12 mit dem Zylinderraum 56 verbundene Anschluß 44 ausschließlich zum Anschluß der Nivellierventil-Anordnung 54.

In den Ausführungsbeispielen nach Fig. 1 und 2 ist die Kolbenzylindereinheit 2 mit einer in Einfederungsrichtung wirkenden, hydraulischen Endlagen-Stoßdämpfung ausgestattet. Vorzugsweise ist hierzu innerhalb des Zylinders 8 ein axialer Steuerstift 78 angeordnet, der sich ausgehend von einer Zylinder-Bodenfläche 80 in Richtung des axialen, den Zylinderraum 56 mit dem Anschluß 44 verbindenden Kanals 58 des Kolbens 10 und der Kolbenstange 12 erstreckt. Dabei besitzt dieser Steuerstift 78 einen sich in Richtung seines freien Endes 82 derart reduzierenden Querschnitt, daß zwischen dem in den Kanal 58 eintauchenden Steuerstift 78 und dem axialen Kanal 58 ein Drosselkanal 84 mit einem sich in Abhängigkeit von der Kolbenbewegung verändernden Strömungsquerschnitt gebildet ist. Dabei ist es wesentlich, daß dieser Drosselkanal 84 in der Einfederungs-Endlage des Kolbens 10 noch einen bestimmten Mindest-Strömungsquerschnitt besitzt. Der Sinn und Zweck dieser Ausbildung wird im folgenden noch näher erläutert werden.

Im Ausführungsbeispiel nach Fig. 2 besitzt die Kolbenzylindereinheit 2 zusätzlich zu der Einfederungs-Stoßdämpfung vorteilhafterweise auch eine in Ausfederungsrichtung wirkende, hydraulische Endlagen-Stoßdämpfung. Hierzu besitzt der Zylinder-Ringraum 62 in seinem dem Kolben 10 axial abgekehrten Endbereich einen insbesondere durch eine radial nach innen vorspringende Ringstufe 86 des Zylinders 8 im Querschnitt reduzierten Ringspaltbereich 88. Der den Ringraum 62 mit seinem Anschluß 66 verbindende Kanal 64 besitzt dabei in Richtung des Ringraumes 62 eine in Fig. 3 erkennbare Mündungsöffnung 90, die vorzugsweise eine sich in Richtung des Kolbens 10 insbesondere etwa birnenförmig verjüngende Flächenform besitzt. Hierdurch ist zwischen dem Kanal 64 und dem Ringraum 62, d.h. zwischen dem Ringspaltbereich 88 und der Mündungsöffnung 90, ein nicht bezeichneter Drosselkanal mit einem sich in Abhängigkeit von der Kolbenbewegung verändernden Strömungsquerschnitt gebildet. Dabei ist es auch hier wesentlich, daß der Drosselkanal in der Ausfederungs-Endlage des Kolbens 10 noch einen bestimmten Mindest-Strömungsquerschnitt besitzt. Auch dies wird im folgenden noch näher erläutert.

In einer in Fig. 2 dargestellten Weiterbildung ist auch der Federspeicher 4 für den Trennkolben 24 mit einer hydraulischen Endlagen-Stoßdämpfung ausgestattet, die hier insbesondere in Ausfederungsrichtung, d.h. in Entspann-Richtung der pneumatischen Feder, wirkt. Konstruktiv entspricht diese Endlagen-Stoßdämpfung etwa der Ausführung bei der Kolbenzylindereinheit 2 in Ausfederungsrichtung. Der Trennkolben 24 weist auf der Seite des Ausgleichsraumes 28 einen axialen, konzentrischen Ringsteg 92 derart auf, daß zwischen diesem Ringsteg 92 und der Innenwandung des Zylindergehäuses 22 ein geringer Ringspalt 94 gebildet ist. Ferner ist der in den Ausgleichsraum 28 mündende Anschluß 42 im dem Trennkolben 24 axial abgekehrten Endbereich des Ausgleichsraums 28 angeordnet und besitzt hierbei eine Mündungsöffnung, die eine sich in dem Trennkolben 24 axial abgekehrter Richtung insbesondere birnenförmig verjüngende Flächenform analog zu der Mündungsöffnung 90 gemäß Fig. 3 besitzt. Hierdurch ist zwischen dem Anschluß 42 und dem Ausgleichsraum 28 ein Drosselkanal mit einem sich in Abhängigkeit von der Trennkolbenbewegung ändernden Strömungsquerschnitt gebildet. Auch hier ist es wiederum wesentlich, daß dieser Drosselkanal in der Ausfederungs-Endlage des Trennkolbens 24 noch einen bestimmten Mindest-Strömungsquerschnitt aufweist, wozu insbesondere der Ringsteg 92 des Trennkolbens 24 radiale Durchströmöffnungen 96 beispielsweise in Form von Ausnehmungen oder Löchern aufweist.

Wie weiterhin in Fig. 1 und 2 dargestellt ist, kann die Kolbenzylindereinheit 2 eine sensorische Meßeinrichtung 98 zum Erfassen ihrer Niveaulage aufweisen. Hierzu können an einer die Kolbenzylindereinheit 2 umschließenden Schutzhülle 100, die vorzugsweise am freien Ende der Kolbenstange 12 befestigt ist und sich mit einem durchmesservergrößerten Abschnitt konzentrisch frei über den Zylinder 8 erstreckt, insbesondere zwei in axialer Richtung zueinander versetzte Meßsensoren 102a und 102b angeordnet sein. Diese Meßsensoren 102a, 102b reagieren auf die Zylinderwandung des Zylinders 8 und erzeugen in Abhängigkeit von der Stellung relativ zu dem Zylinder 8 Meßsignale, die in einer nicht dargestellten Steuerschaltung zur Niveaueinstellung über die Nivellierventil-Anordnung 54 ausgewertet werden. Die Meßsensoren 102a, b können ortsfest oder axial verschiebbar an der Schutzhülle 100 gehalten sein.

Im folgenden soll nun die Funktionsweise des Federungssystems erläutert werden.

Gemäß Fig. 1 wird beim Einfedern der Kolbenzylindereinheit 2 in Pfeilrichtung 104 ein dem Volumen der Kolbenstange 12 entsprechendes Volumen des Hydraulikmediums über die Leitungsverbindung 6 in den Ausgleichsraum 28 des Federspeichers 4 verdrängt. Hierdurch wird der Trennkolben 24 in Richtung der Federkammer 26 verschoben, wodurch sich deren Volumen verkleinert und der Druck $p_{pn}$ ansteigt. Aufgrund der Speziellen Ausgestaltung ist hierbei der Verschiebeweg des Trennkolbens 24 geringer als der Arbeitshub des Kolbens 10 der Kolbenzylindereinheit 2, so daß die Federkennlinie des Federspeichers 4 vorteilhafterweise flach ist. Weiterhin kann durch den beschriebenen Druckunterschied zwischen dem Druck $p_{pn}$ in der Federkammer 26 und dem Druck $p_{hy}$ in dem Ausgleichsraum 28 der Druck $p_{pn}$ insgesamt gering gehalten werden. Hierzu soll im folgenden ein Zahlenbeispiel angegeben werden:

Besitzt der Kolben 10 bzw. die Kolbenstange 12 eine Querschnittsfläche von 30 cm², der ringförmige Ausgleichsraum 28 eine Querschnittsfläche von 90 cm² und der Trennkolben 24 eine der Federkammer 26 zugekehrte, wirksame Druckfläche 34 von 900 cm², so reicht ein pneumatischer Druck $p_{pn}$ von 25 bar aus, um mit der Kolbenzylindereinheit 2 eine Last von 7500 kp zu tragen. Hierbei gilt folgende Beziehung:

Pneumatischer Druck $p_{pn}$ x Druckfläche 34 des Trennkolbens 24 = hydraulischer Druck $p_{hy}$ x ringförmige Druckfläche 36 des Trennkolbens 24.

Da nun über die Leitungsverbindung 6 innerhalb des Zylinderraums 56 der Kolbenzylindereinheit 2 der gleiche Druck $p_{hy}$ wie in dem Ausgleichsraum 28 herrscht, ist die Tragkraft der Kolbenzylindereinheit 2 = wirksame Druckfläche des Kolbens 10 mal dem hydraulischen Druck $p_{hy}$.

Zum Blockieren der Hubbewegung der Kolbenzylindereinheit 2 wird das Absperrventil 52 in seine Sperrstellung geschaltet. Hierdurch ist die hydraulische Verbindung zwischen dem Zylinderraum 56 und dem Federspeicher 4 unterbrochen, so daß sich die Kolbenzylindereinheit 2 auf dem nicht komprimierbaren Hydraulikmedium "abstützt".

Im blockierten Zustand kann die Kolbenzylindereinheit 2 jedoch ein- und ausgefahren werden. Zum Ausfahren (Anheben eines Fahrzeuges) wird über die Nivellierventil-Anordnung 54 Hydraulikmedium aus der Druckleitung P in die Kolbenzylindereinheit 2, d.h. in den Zylinderraum 56 eingeführt. Hierdurch erfolgt eine Volumenvergrößerung des Zylinderraums 56, so daß sich die Kolbenzylindereinheit 2 "verlängert". Zum Einfahren (Absenken des Fahrzeuges) wird die Nivellierventil-Anordnung 54 in eine Schaltstellung geschaltet, in der der Zylinderraum 56 mit der Rücklaufleitung T verbunden ist, so daß Hydraulikmedium aus der Kolbenzylindereinheit 2 abfließen kann.

Zum Nivellieren ist das Absperrventil 52 auf seine Durchflußstellung geschaltet. Zeigen die beiden Meßsensoren 102a, 102b kein Signal an, da sie beide "oberhalb" der Zylinder-Mantelfläche stehen, so wird die Nivellierventil-Anordnung 54 in ihre oben beschriebene Absenkstellung geschaltet, in der Hydraulikmedium zur Rücklaufleitung T abfließen kann, wodurch dann die Kolbenzylindereinheit 2 einfährt. Die Nivellierventil-Anordnung 54 bleibt solange in dieser Stellung, bis die Meßeinrichtung 98 die richtige Niveaustellung anzeigt. Beim Nivellieren fließt aus dem Ausgleichsraum 28 kein Hydraulikmedium ab, da das Dämpfungsventil 46 in dieser Durchflußrichtung einen hohen Strömungswiderstand hat. Stehen beide Sensoren 102a, 102b im Bereich der Zylinder-Mantelfläche (Fahrzeugniveau ist zu niedrig), so wird die Nivellierventil-Anordnung 54 in eine Stellung geschaltet, in der der Kolbenzylindereinheit 2 Hydraulikmedium aus der Druckleitung P zugeführt wird. Die Nivellierung wird beendet, wenn der Sensor 102a oberhalb und der Sensor 102b unterhalb der Zylinder-Mantelfläche stehen.

Die lastabhängige Dämpfungseinstellung des Dämpfungsventils 46 erfolgt durch kurzzeitiges Betätigen des Schaltventils 50, wodurch der hydraulische Druck $p_{hy}$ auf das Verstellglied 48 des Dämpfungsventils 46 wirkt. Dabei ist die Verstellung erfindungsgemäß so ausgelegt, daß bei hohem Druck $p_{hy}$ eine hohe Dämpfungswirkung (Drosselung) und bei geringem Druck $p_{hy}$ eine geringere Drosselung wirksam ist.

Der wesentliche Vorteil des hydropneumatischen Federungssystems ist, daß eine sehr flache Federkennlinie realisiert werden kann, wodurch ein sehr hoher Federungskomfort erreicht wird. Trotz der sehr flachen Federkennlinie bleiben bei leerem und voll beladenem Fahrzeug durch die mögliche Nivellierung große Federwege erhalten. Der Nachteil der sehr flachen Federkennlinie, daß die Kolbenzylindereinheit 2 beim schnellen Überfahren eines Hindernisses sehr leicht in ihren Endanschlag zusammengeschoben werden kann, wird durch die hydraulische Endanschlag-Stoßdämpfung beseitigt. Die Wirkungsweise dieser hydraulischen, weg- und geschwindigkeitsabhängigen Stoßdämpfung ist wie folgt. Beim Einfedern wird der Steuerstift 78 axial in den Kanal 58 hinein verschoben. Hierdurch verändert sich der Strömungsquerschnitt des Drosselkanals 84 stetig bis auf einen engen Ringspalt. Hiermit steigt der Drosselwiderstand für den Durchfluß des Hydraulikmediums entsprechend an, so daß folglich die Kolbenbewegung langsam und schonend abgebremst wird. Dabei ist der oben erwähnte Mindest-Strömungsquerschnitt wesentlich, damit die Kolbenzylindereinheit 2 aus dem ganz eingefahrenen Zustand heraus auch wieder auseinandergefahren werden kann. Wäre nämlich der Kanal 58 durch den Steuerstift 78 ganz verschlossen, so könnte das Hydraulikmedium nicht mehr zurück aus dem Ausgleichsraunm 28 in den Zylinderraum 56 gelangen. Aufgrund des vorgesehenen Mindest-Querschnittes kann vorteilhafterweise die Kolbenzylindereinheit 2 auch sehr sanft aus ihrer Endlage wieder auseinanderfahren. Somit sorgt die Endlagen-Stoßdämpfung vorteilhafterweise auch dafür, daß die Kolbenzylindereinheit 2 aus ihrer vollkommen zusammengeschobenen Lage auch sehr sanft wieder auseinandergeschoben wird, anstatt bedingt durch den erhöhten Druck $p_{pn}$ in der Federkammer 26 aus ihrer vollkommen zusammengeschobenen Lage heraus mit hoher Anfangsgeschwindigkeit auseinanderzuschnellen. Ist dann der Zylinder eine gewisse Strecke auseinandergefahren, so ist der pneumatische Druck $p_{pn}$ vorteilhafterweise schon so weit abgefallen, daß die Kräfte, die die Kolbenzylindereinheit auseinanderschieben, dann entsprechend geringer sind. Die Endlagen-Stoßdämpfung bewirkt demnach nicht nur die Unterdrückung des Stoßes beim Zusammenschieben der Kolbenzylindereinheit 2, sondern hat vorteilhafterweise auch zur Folge, daß die Kolbenzylindereinheit 2 sanft und nicht ruckartig auseinanderfährt. Ein zu schnelles Auseinanderfahren hätte nämlich die Folge, daß Stoßkräfte auf einen Fahrzeugrahmen auftreten, und zwar hervorgerufen durch den Aufprall eines Rades auf der Fahrbahn.

In der Ausführungsform nach Fig. 2 ist die Wirkungsweise im wesentlichen die gleiche wie bei der Ausführung nach Fig. 1. Jedoch fließt hier das bei der Kolbenbewegung aus dem Zylinderraum 56 verdrängte Hydraulikmedium nur teilweise in den Ausgleichsraum 28, denn ein Teilvolumen fließt auch über die Leitungsverbindung 68 und den Kanal 64 in den Ringraum 62, dessen Volumen sich beim Einfedern ja vergrößert. Jedoch entspricht auch hier das in den Ausgleichsraum 28 verdrängte Volumen dem in den Zylinder 8 hinein verschobenen Volumen der Kolbenstange 12. Hierdurch steigt wiederum der pneumatische Druck $p_{pn}$ an. Beim Ausfedern (Pfeilrichtung 105) erfolgt eine Hydraulikströmung in umgekehrter Richtung, d.h. einerseits aus dem Ausgleichsraum 28 und andererseits aus dem Ringraum 62 zurück in den Zylinderraum 56.

Das Blockieren und Nivellieren erfolgt analog zu der Ausführung nach Fig. 1.

Bei der Ausführung nach Fig. 2 kann nun zusätzlich bei einer Anwendung in einem Kraftfahrzeug ein Rad angehoben und abgesenkt werden. Dies ist durch die Unterteilung des Innenraums des Zylinders 8 in den Zylinderraum 56 und den Ringraum 62, d.h. durch die Umfangsdichtung 60, möglich. Zum Anheben wird zunächst das Absperrventil 52 in seine Sperrstellung geschaltet. Dann wird die Nivellierventil-Anordnung 54 in eine Schaltstellung geschaltet, in der der Zylinderraum 56 über den Anschluß 44 mit der Rücklaufleitung T verbunden ist. Hierdurch kann Hydraulikmedium aus dem Zylinderraum 56 abfließen. Gleichzeitig wird durch den pneumatischen Druck $p_{pn}$ über den Trennkolben 24 Hydraulikmedium aus dem Ausgleichsraum 28 über die Leitungsverbindung 68, den Anschluß 66 und den axialen Kanal 64 in den Ringraum 62 verdrängt. Hierdurch fährt die Kolbenzylindereinheit 2 zusammen, wodurch in einem Fahrzeug das entsprechende Rad 20 angehoben wird. Hierbei ist von besonderem Vorteil, daß der Trennkolben 24 im Vergleich zu dem Kolben 10 einen sehr kleinen Weg verschoben wird, so daß der pneumatische Druck $p_{pn}$ in der Federkammer 26 auch nur geringfügig abfällt. Hierdurch ist gewährleistet, daß die Kolbenzylinderanordnung 2 vollkommen eingezogen werden kann. Ein weiterer Vorteil dieser Lösung ist, daß das Einziehen ohne die Fahrzeughydraulik, d.h. ohne Pumpenleistung, erfolgen kann. Soll nachfolgend die Kolbenzylindereinheit 2 wieder auseinandergefahren werden, so wird über die Nivellierventil-Anordnung 54 der Zylinderraum 56 mit der Druckleitung P verbunden. Hierdurch fließt Hydraulikmedium in den Zylinderraum 56 hinein. Der Zylinder fährt auseinander, wodurch sich der Ringraum 62 verkleinert, so daß das hierin enthaltene Hydraulikmedium über die Leitungsverbindung 68 wieder in den Ausgleichsraum 28 des Federspeichers 4 verdrängt wird. Hierdurch wird der Trennkolben 24 wieder etwas verschoben, so daß der Druck $p_{pn}$ entsprechend ansteigt. Hierdurch wird vorteilhafterweise die "hydraulische Einspannung" des Kolbens 10 in dem Zylinder 8 erhöht.

Die Wirkungsweise der Endlagen-Stoßdämpfung in Einfederungsrichtung ist analog zur Ausführung nach Fig. 1. Zusätzlich ist hier jedoch auch eine Endlagen-Stoßdämpfung in Ausfederungsrichtung vorgesehen. Diese Stoßdämpfung verhindert, daß - beispielsweise wenn ein Rad über ein tiefes Schlagloch fährt - die Kolbenzylindereinheit 2 sehr hart gegen den mechnischen Endanschlag auseinanderfährt, wodurch eine hohe mechanische Beanspruchung des Zylinders auftreten würde. Weiterhin würde ein hartes Anschlagen auch zu unangenehmen Geräuschen im Fahrzeug und zu Stößen auf den Fahrzeugrahmen führen. Die Wirkungsweise der hydraulischen Stoßdämpfung in Ausfederungsrichtung ist nun wie folgt. Fährt die Kolbenzylindereinheit 2 ganz auseinander, so gelangt zunächst der größere Öffnungsteil der Mündungsöffnung 90 des Kanals 64 (siehe hierzu Fig. 3) in den verengten Ringspaltbereich 88 des Zylinders 8. In diesem Bereich erfolgt eine geringe Drosselung der Hydraulikströmung aus dem Ringraum 62 in den Kanal 64. Je weiter die Kolbenzylindereinheit 2 nun auseinanderfährt, um so enger wird die Drosselung, bis der verengte Bereich der etwa birnenförmigen Mündungsöffnung 90 fast ganz in den Ringspaltbereich 88 gelangt ist. Beim Zusammenfahren bleibt jedoch stets ein geringer Mindest-Strömungsquerschnitt vorhanden, so daß nachfolgend Hydraulikmedium auch wieder aus dem Kanal 64 zurück in den Ringraum 62 gelangen und die Kolbenzylindereinheit so auch wieder auseinanderfahren kann.

In der Ausführung nach Fig. 2 ist folglich eine Endlagen-Stoßdämpfung sowohl in Ein- als auch in Ausfederungsrichtung vorgesehen. Hierbei besteht nun zusätzlich die Möglichkeit, folgende Dämpfung des Federungssystems zu realisieren:
Die Einfederungs-Stoßdämpfung (Steuerstift 78 in Verbindung mit dem axialen Kanal 58) setzt von einer mittleren Niveaulage der Kolbenzylindereinheit aus gesehen beispielsweise nach ca. 20 mm Weg in Einfederungsrichtung ein. Die Ausfederungs-Stoßdämpfung (Ringspaltbereich 88 in Verbindung mit der Mündungsöffnung 90 des Kanals 64) setzt, ausgehend von der mittleren Lage, ebenfalls beispielsweise nach etwa 20 mm Weg, allerdings in Ausfederungsrichtung gesehen, ein. In dieser Kombination wird vorteilhafterweise erreicht, daß beispielsweise ± 20 mm Federweg ungedämpft sind und erst eine wegabhängige Dämpfung des Federungssystems bei größeren Federwegen einsetzt. Diese Lösung hat den entscheidenden Vorteil, daß das gesamte hydropneumatische Federungssystem fast keine Erwärmung erfährt, wodurch ein sehr guter Federungskomfort erreicht wird. In einem Kraftfahrzeug macht beispielsweise ein Rad zum überwiegenden Teil bei normaler Straßenfahrt nur geringe Hubbewegungen. Würden schon diese kleinen Hubbewegungen gedämpft werden, so würde unnötigerweise Wärme erzeugt und es würden auch Stöße auf den Fahrzeugrahmen übertragen. Dies wird durch die beschriebenen Maßnahmen vorteilhafterweise vermieden.

Neben der Endlagen-Stoßdämpfung der Kolbenzylindereinheit 2 ist nun bei der Ausführung nach Fig. 2 vorteilhafterweise auch eine Stoßdämpfung innerhalb des Federspeichers 4 für den Trennkolben 24 in Ausfederungsrichtung vorhanden. Diese Stoßdämpfung entspricht in ihrer Wirkungsweise der Ausfederungsstoßdämpfung der Kolbenzylindereinheit 2, so daß auf die diesbezüglichen Erläuterungen verwiesen werden kann. Die Stoßdämpfung des Federspeichers 4 verhindert vorteilhafterweise, daß der Trennkolben 24 ungebremst durch den pneumatischen Druck $p_{pn}$ mechanisch gegen seinen Anschlag prallen kann. Dies bedeutet, daß der Trennkolben 24 bedingt durch eine hydraulische Drosselung langsam und abgebremst in seinen Endanschlag fährt, wobei dann der Ringsteg 92 auf dem endseitigen Boden des Zylindergehäuses 22 aufliegt. Um den Trennkolben 24 nachfolgend wieder in Richtung der Federkammer 26 verschieben zu können, sind die Durchströmöffnungen 96 in dem Ringsteg 92 gebildet, wodurch sichergestellt ist, daß Hydraulikmedium mit dem Druck $p_{hy}$ die Druckfläche 36 des Trennkolbens 24 gegen den Druck $p_{pn}$ beaufschlagen kann.

Bei der integrierten Ausführungsform nach Fig. 4 ist die Wirkungsweise wie folgt. Wird der Kolben 10 über die Kolbenstange 12 in den Zylinder 8 eingeschoben, so wird Hydraulikmedium aus dem Zylinderraum 56 über die Strömungsöffnungen 70 und/oder die externe Leitungsverbindung 76 in den den Zylinder 8 ringförmig umschließenden Ausgleichsraum 28 verdrängt. Dies hat zur Folge, daß der Trennkolben 24 gegen den Druck $p_{pn}$ des kompressiblen Mediums in der Federkammer 26 verschoben wird. Der Druck $p_{pn}$ steigt entsprechend an und damit auch der Druck $p_{hy}$ im Zylinderraum 56 und im Ausgleichsraum 28. Wird der Kolben 10 mit der Kolbenstange 12 wieder aus dem Zylinder 8 bewegt, so fließt das Hydraulikmedium aus dem Ausgleichsraum 28 wieder zurück in den Zylinderraum 56. Der Trennkolben 24 verschiebt sich ebenfalls zurück, so daß der Druck $p_{pn}$ entsprechend abfällt.

Eine Nivellierung ist in der oben bereits beschriebenen Weise über die Nivellierventil-Anordnung 54 möglich, indem über den Anschluß 44 und den Kanal 58 entweder Hydraulikmedium aus der Druckleitung P in den Zylinderraum 56 zugeführt oder aus dem Zylinderraum 56 zur Rücklaufleitung T entnommen wird.

Bei der Ausführungsform nach Fig. 4 ist ein Blockieren der Kolbenzylindereinheit 2 nicht möglich, denn bei Sperrung der Hydraulikströmung zwischen dem Zylinderraum 56 und dem Ausgleichsraum 28 wirkt die Belastung nach wie vor auf den Federspeicher 4, d.h. gegen den pneumatischen Druck $p_{pn}$. Jedoch ist für Anwendungsfälle, bei denen ein Blockieren nicht erforderlich ist, diese Lösung dennoch sehr vorteilhaft, da die Kolbenzylindereinheit sehr kompakt ist und mit einem sehr geringen pneumatischen Druck $p_{pn}$ arbeitet.

Eine Dämpfung ist entweder über die internen Dämpfungsventile 72 oder über das externe Dämpfungsventil 46 möglich. Ferner können Dämpfungsventile gegebenenfalls ganz entfallen, wenn der Querschnitt beispielsweise der radialen Strömungsöffnungen 70 entsprechend klein gewählt wird.

Ergänzend ist noch darauf hinzuweisen, daß in allen Ausführungsbeispielen der Fig. 1 bis 4 der Trennkolben 24 auf seiner der pneumatischen Federkammer 26 zugekehrten Seite eine Vertiefung 106 aufweist, die vorteilhafterweise gewährleistet, daß auch im Endanschlag des Trennkolbens 24 noch ein Mindest-Restvolumen für das kompressible Medium vorhandenbleibt, so daß ein unzulässig hoher Druckanstieg vorteilhafterweise vermieden wird.

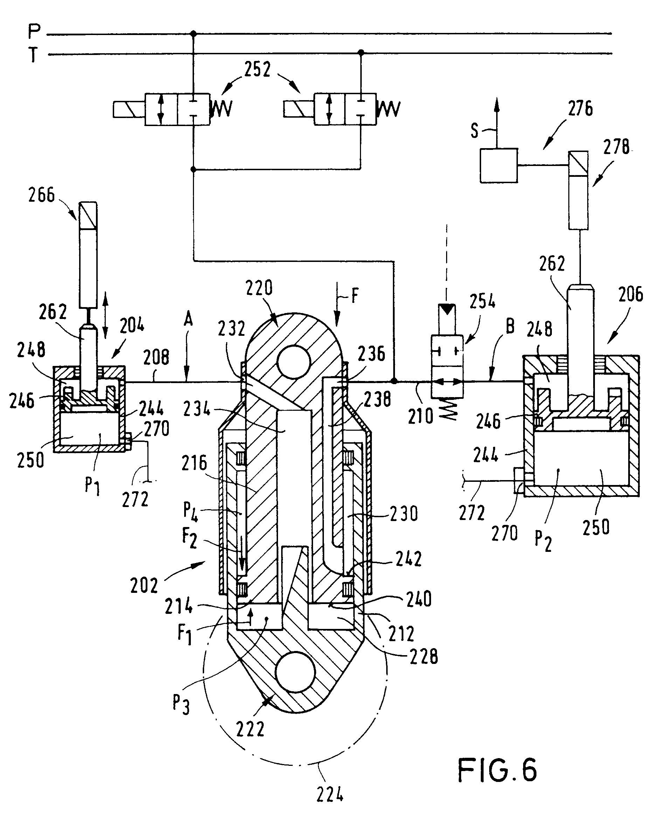

Wie sich nun aus den Fig. 5 und 6 jeweils ergibt, besteht das Federungssystem in weiteren, erfindungsgemäßen Ausführungen ebenfalls aus mindestens einer hydraulischen Kolbenzylindereinheit 202, es sind jedoch erfindungsgemäß zwei mit dieser zusammenwirkende, insbesondere hydropneumatische Federspeicher 204, 206 vorhanden, die in den bevorzugten Ausführungsformen der Erfindung unabhängig, d.h. räumlich getrennt von der Kolbenzylindereinheit 202 angeordnet und über jeweils eine hydraulische Leitungsverbindung 208, 210 angeschlossen sind.

Die Kolbenzylindereinheit 202 besteht aus einem Zylinder 212, in dem ein Kolben 214 axialbeweglich geführt ist. Der Kolben 214 ist mechanisch mit einer Kolbenstange 216 verbunden, die gegen den Zylinder 212 über eine Umfangsdichtung 218 abgedichtet nach außen geführt ist. An ihrem freien, nach außen geführten Ende besitzt die Kolbenstange 216 ein Anschlußstück 220, und auch der Zylinder 212 weist an seinem gegenüberliegenden, geschlossenen Ende ein Anschlußstück 222 auf. Vorzugsweise ist das Anschlußstück 220 der Kolbenstange 216 an einer "gefederten Masse", beispielsweise einem Fahrzeugrahmen, befestigbar, während das Anschlußstück 222 des Zylinders 212 mit einer "ungefederten Masse", insbesondere einem nur strichpunktiert angedeuteten Fahrzeugrad 224, verbindbar ist.

Der Kolben 214 ist über mindestens eine Umfangsdichtung 226 gegen die Innenwandung des Zylinders 212 abgedichtet und teilt hierdurch zwei gegensinnig volumenveränderliche Druckräume voneinander ab, nämlich einen der Kolbenstange 216 gegenüberliegenden Zylinderraum 228 von einem die Kolbenstange 216 umschließenden Ringraum 230. Die Kolbenzylindereinheit 202 besitzt im nach außen geführten Endbereich der Kolbenstange 216 einerseits einen ersten Anschluß 232, der über einen axialen Kanal 234 der Kolbenstange 216 in den Zylinderraum 228 mündet, sowie andererseits einen zweiten Anschluß 236, der ebenfalls über einen axialen Kanal 238 der Kolbenstange 216 in den Ringraum 230 mündet. An den Anschlüssen 232 und 236 sind über die Leitungsverbindungen 210, 208 die Federspeicher 206, 204 angeschlossen.

Aufgrund der beschriebenen Ausgestaltung der Kolbenzylindereinheit 202 besitzt der Kolben 214 zwei gegenüberliegende, wirksam druckbeaufschlagte Kolbenflächen, und zwar eine dem Zylinderraum 228 zugekehrte Kolben-Stirnfläche 240 sowie eine gegenüber der Stirnfläche 240 flächenmäßig kleinere, dem Ringraum zugekehrte Kolben-Ringfläche 242.

In den bevorzugten Ausführungsbeispielen der Erfindung ist jeder der beiden Federspeicher 204, 206 als Kolbenspeicher mit einem in einem Zylindergehäuse 244 schwimmend geführten Trennkolben 246 ausgebildet. Der Trennkolben 246 trennt innerhalb des Zylindergehäuses 244 einen hydraulisch mit dem jeweiligen Druckraum 228, 230 der Kolbenzylindereinheit 202 verbundenen Speicherraum 248 von einer mit dem kompressiblen Medium gefüllten Federkammer 250. Als kompressibles Medium wird vorzugsweise ein Gas eingesetzt, jedoch kann insbesondere für hohe "pneumatische" Drücke auch z.B. Silikon oder dergleichen Medium verwendet werden. Der verwendete Begriff "pneumatisch" beschränkt die Erfindung somit nicht auf Gase.

Erfindungsgemäß sind nun die kompressiblen Medien in den Federkammern 250 der beiden Federspeicher 204, 206 jeweils mit einem pneumatischen Vorspanndruck $p_1$ und $p_2$ derart beaufschlagt, daß in den beiden Druckräumen 228 und 230 der Kolbenzylindereinheit 202 vorzugsweise unterschiedliche hydraulische Drücke $p_3$ und $p_4$ herrschen. In jedem Fall ergeben sich aber zwei gegensinnig auf den Kolben 214 wirkende, unterschiedlich große Kolbenkräfte $F_1$ und $F_2$ durch Beaufschlagung der Kolbenflächen 240, 242 mit dem jeweiligen hydraulischen Druck $P_3$ bzw. $P_4$. Hierbei ist $F_1$ = Stirnfläche 240 mal Druck $p_4$ (Fig. 5) bzw. $p_3$ (Fig. 6) sowie $F_2$ = Ringfläche 242 mal Druck $p_3$ (Fig. 5) bzw. $p_4$ (Fig. 6). Die gesamte Tragkraft F der Kolbenzylindereinheit 202 ergibt sich aus der Differenz $F = F_1 - F_2$.

In der erfindungsgemäßen Ausführungsform nach Fig. 5 bildet der Ringraum 230 mit seinem verbundenen Federspeicher 204 einen geschlossenen, rein volumengesteuerten Hydraulik-Kreislauf A, während der Zylinderraum 228 mit seinem verbundenen Federspeicher 206 einen lastgesteuerten Hydraulik-Kreislauf B bildet. Dieser lastgesteuerte Kreislauf B ist vorzugsweise über eine Nivellierventil-Anordnung 252 wahlweise mit einer Druckleitung P oder einer Tankleitung T eines Hydrauliksystems verbindbar. Dabei kann der volumengesteuerte Federspeicher 204 kleiner als der lastgesteuerte Federspeicher 206 ausgebildet sein. Die Ausführung nach Fig. 5 eignet sich insbesondere für Anwendungsfälle, in denen die Last der Kolbenzylindereinheit variabel, d.h. nicht konstant ist. Die Federspeicher arbeiten hierbei mit geringen Drücken bei verhältnismäßig kleinen Volumina der kompressiblen Medien.

Demgegenüber eignet sich die Ausführung nach Fig. 6 insbesondere für Anwendungsfälle, bei denen die Last konstant ist. Hierbei ist dann der volumengesteuerte Federspeicher 204 mit dem Zylinderraum 228 verbunden, während der lastgesteuerte Federspeicher 206 mit dem Ringraum 230 sowie auch mit der Nivellierventil-Anordnung 252 verbunden ist. Bei dieser Ausführungsform können besonders kleine Speichervolumina vorgesehen werden, jedoch werden hierbei die Drücke entsprechend höher als bei dem System nach Fig. 5.

In einer Weiterbildung der Erfindung ist in der Leitungsverbindung 10 zwischen dem Federspeicher 206 des lastgesteuerten Hydraulik-Kreislaufs B und dem mit der Nivellierventil-Anordnung 52 verbundenen Druckraum (in Fig. 5 Zylinderraum 228 und in Fig. 6 Ringraum 230) ein Blockierventil 254 angeordnet. Darüber hinaus kann es für bestimmte Anwendungsfälle vorteilhaft sein, wenn in dieser Leitungsverbindung 210 auch ein insbesondere lastabhängig einstellbares Dämpfungsventil 256 angeordnet ist (nur in Fig. 7 dargestellt).

In einer besonders vorteilhaften Weiterbildung der Erfindung ist der Trennkolben 26 mindestens einer der beiden Federspeicher, vorzugsweise jedoch - wie dargestellt - jeder der beiden Federspeicher 204, 206, als Druckwandler mit zwei unterschiedlich großen, wirksamen Druckflächen 258, 260 ausgebildet. Hierbei ist es besonders vorteilhaft, wenn die der Federkammer 250 zugekehrte, von dem Vorspanndruck $p_1$ bzw. $p_2$ beaufschlagte, erste Druckfläche 258 größer als die gegenüberliegende, von dem hydraulischen Druck $p_3$ bzw. $p_4$ beaufschlagte, zweite Druckfläche 260 ist. Hierdurch ist erfindungsgemäß der Vorspanndruck $p_1$ bzw. $p_2$ jeweils kleiner als der hydraulische Druck $p_3$ bzw. $p_4$. Es sei in diesem Zusammenhang nochmals bemerkt, daß unter dem Begriff "wirksame Druckfläche" jeweils die von dem pneumatischen bzw. hydraulischen Druck beaufschlagte und dabei für die Entstehung einer in Bewegungsrichtung des Trennkolbens 246 wirkenden Verschiebungskraft maßgebende Oberfläche des Trennkolbens zu verstehen ist. Durch diese erfindungsgemäße Maßnahme kann vorteilhafterweise jeweils der Trennkolben 246 mit einer vereinfachten "Öldichtung" anstelle der bisher erforderlichen, aus mindestens drei bis fünf Einzeldichtungen bestehenden "Gasdichtung" ausgestattet werden, da dem Druck des kompressiblen Mediums, insbesondere Druckluft, der höhere Druck des Hydraulikmediums entgegensteht. Dies trägt zu der angestrebten, kompakten Bauform bei, da der Trennkolben 246 mit nur einer Umfangsdichtung und daher mit wesentlich kürzerer, axialer Länge ausgebildet werden kann. Dabei braucht diese Umfangsdichtung vorteilhafterweise auch nur für den Differenzdruck zwischen dem pneumatischen und dem hydraulischen Druck ausgelegt zu sein. Weiterhin ist hierbei von Vorteil, daß aufgrund des höheren hydraulischen Druckes der Kolbenzylindereinheit die Druckfläche, d.h. die Stirnfläche 240 des die Last aufnehmenden Kolbens 214 kleiner und damit die Kolbenzylindereinheit 202 selbst ebenfalls kompakter ausgebildet werden kann. Ferner ist noch von Vorteil, daß durch die erfindungsgemäße Ausgestaltung die Reibungskraft des Trennkolbens 246 jeweils wesentlich reduziert wird. Da der pneumatische Druck geringer als der hydraulische Druck ist, wird die Umfangsdichtung des jeweiligen Trennkolbens 246 auch nur mit dem Differenzdruck beaufschlagt und hat daher eine entsprechend geringe Reibung. Dies ist insbesondere für dynamische Vorgänge vorteilhaft und trägt zu optimalen Federungseigenschaften bei.

Um die beschriebene Flächendifferenz der Trennkolben 246 zu gewährleisten, sind diese - analog zu Fig. 1 bis 4 - erfindungsgemäß jeweils mit einer Trennkolbenstange 262 verbunden, die sich durch den Speicherraum 248 hindurch sowie über eine Umfangsdichtung 264 abgedichtet aus dem Zylindergehäuse 244 nach außen erstreckt. Somit weist der Speicherraum 248 einen gegenüber dem Innenquerschnitt der Federkammer 250 bzw. des Zylindergehäuses 244 reduzierten, ringförmigen, zu der Trennkolbenstange 262 konzentrischen Querschnitt auf. Über eine Variation des Verhältnisses zwischen dem Innenquerschnitt der Federkammer 250 und dem Querschnitt des Speicherraumes 248, d.h. über eine Variation des Verhältnisses zwischen den wirksam druckbeaufschlagten Druckflächen 258 und 260, läßt sich auch hier erfindungsgemäß das Druckverhältnis $p_1$ : $p_3$ bzw. $p_2$ : $p_4$ bestimmen.

Erfindungsgemäß werden nun weiterhin auch in dieser Ausführungsform die Federungsbewegungen der Kolbenzylindereinheit 202, d.h. die Bewegungen des Kolbens 214 in dem Zylinder 212, über das Hydraulikmedium insbesondere mit einer Weg-Untersetzung (negative Übersetzung) auf den jeweiligen Trennkolben 246 übertragen. Dies bedeutet, daß ein bestimmter Hub des Kolbens 214 einen nur geringeren Hub des jeweiligen Trennkolbens 246 veruracht. Konstruktiv entspricht diese Ausführung derjenigen der Fig. 1 und 2, so daß hierauf verwiesen werden kann.

Aufgrund der erfindungsgemäßen Ausgestaltung des volumengesteuerten Federspeichers 204 als Druckwandler mit nach außen geführter Trennkolbenstange 262 ist es vorteilhafterweise möglich, die Nivellierventil-Anordnung 252 zum Einstellen der Niveaulage der Kolbenzylindereinheit 202 von einem jeweiligen Ist-Niveau auf ein vorbestimmtes Soll-Niveau in Abhängigkeit von der zu dem jeweiligen Ist-Niveau proportionalen Stellung des Trennkolbens 246 des volumengesteuerten Federspeichers 204 anzusteuern. Hierzu ist die Trennkolbenstange 262 mit einem Weggeber 266 verbunden, wobei anhand der Ausgangssignale dieses Weggebers 266 die Nivellierventil-Anordnung über eine Steuereinheit 268 (in Fig. 5 gestrichelt eingezeichnet) angesteuert wird. Diese Ausgestaltung ist vor allem insofern von besonderem Vorteil, als ja durch die oben beschriebene Weg-Untersetzung der Trennkolben 246 einen im Vergleich zu den Federungsbewegungen der Kolbenzylindereinheit 2 sehr viel geringeren Hub besitzt, so daß folglich auch ein kleiner, kompakter und damit sehr preisgünstiger Weggeber 266 verwendet werden kann. Im Vergleich zu einem unmittelbar im Bereich der Kolbenzylindereinheit 202 angeordneten Weggeber reduzieren sich die Kosten für den Weggeber 266 gemäß der vorliegenden Erfindung auf etwa 1/10.

Gemäß einer Weiterbildung der Erfindung erfolgt zumindest zeitweise, vorzugsweise jedoch ständig, eine Überwachung auf Leckagen des Hydraulikmediums und/oder des kompressiblen Mediums. Dies ist durch die beschriebene, erfindungsgemäße Ausgestaltung des volumengesteuerten Federspeichers 204 sehr leicht realisierbar, indem in einer Steuereinheit, beispielsweise der oben bereits erwähnten Steuereinheit 268 (Fig. 5), ein maximal möglicher, von den Endlagen der Kolbenzylindereinheit 202 bestimmter Bewegungsbereich des Trennkolbens 246 des volumengesteuerten Federspeichers 204 durch zwei Soll-Grenzwerte festgelegt und die jeweilige Ist-Stellung des Trennkolbens 246 über den Weggeber 266 überwacht wird, wobei eine Fehlermeldung erzeugt wird, wenn die Ist-Stellung außerhalb des von den Soll-Grenzwerten bestimmten Bewegungsbereichs des Trennkolbens 246 liegt. Eine derartige Stellung des Trennkolbens 246 außerhalb dieses Grenzwertbereiches ist nämlich nur möglich, wenn an irgendeiner Stelle des Systems eine Leckage auftritt und Medium austritt.

Das erfindungsgemäße Federungssystem eröffnet nun ferner die Möglichkeit, die die Tragkraft F bestimmenden Kolbenkräfte $F_1$ und $F_2$ im stati-

schen und/oder dynamischen Betrieb zu ändern, indem lediglich die pneumatischen Vorspanndrücke $p_1$, $p_2$ verändert zu werden brauchen. Hierzu ist die Federkammer 250 mindestens eines der beiden Federspeicher 204, 206, im dargestellten Ausführungsbeispiel nach Fig. 5 beispielhaft nur des volumengesteuerten Federspeichers 204, über einen Anschluß 270 und eine Druckleitung 272 mit einer Druck-Einstelleinrichtung 274 verbunden, bei der es sich beispielsweise um eine pneumatische Druckquelle und ein entsprechendes Schaltventil handeln kann. Erfindungsgemäß ist somit eine einfache Anpassung des Systems an verschiedene Betriebszustände möglich (Einstellung von Lastverhältnissen, Stoßgrad usw.).

In den Fig. 5 und 6 ist nun noch eine weitere vorteilhafte Ausgestaltung der Erfindung veranschaulicht, wonach das erfindungsgemäße Federungssystem mit einer Last-Erfassungseinrichtung 276 ausgestattet ist, die die auf die Kolbenzylindereinheit 202 wirkende Last qualitativ und/oder quantitativ ermittelt. Hierzu besitzt die Last-Erfassungseinrichtung 276 einen mit der Trennkolbenstange 262 des lastgesteuerten Federspeichers 206 verbundenen Weggeber 278. Über diesen Weggeber 278, d.h. anhand der Stellung des Trennkolbens 246 des lastgesteuerten Federspeichers 206, erzeugt die Last-Erfassungseinrichtung 276 lastproportionale Signale S. Diese Signale S können vorteilhafterweise zur optischen und/oder akustischen Anzeige ausgewertet werden. Besonders vorteilhaft ist es, wenn diese Signale S unmittelbar einem Fahrtenschreiber zugeführt werden, der dann den jeweiligen Ladezustand leicht nachprüfbar registriert. Es kann auch lediglich bei Überschreiten eines bestimmten Last-Grenzwertes ein qualitatives Signal (optisch/akustisch) ausgelöst werden. Ferner kann die Last nach Auswertung des Signals S auch quantitativ z.B. auf einem Digital-Display angezeigt werden. Zusätzlich oder alternativ zu der Anzeige der Last kann das Signal S mit Vorteil auch zum Veranlassen bestimmter Folge-Reaktionen ausgewertet werden, wie beispielsweise Zündungsunterbrechung und/oder Blockieren der Bremsen bei Überschreiten einer Höchstlast. Es sei noch darauf hingewiesen, daß die Stellung des Trennkolbens 246 des lastgesteuerten Federspeichers 206 stets absolut lastproportional ist, und zwar auch dann, wenn das Niveau der Kolbenzylindereinheit 202 über die Nivellierventil-Anordnung 252 angehoben werden sollte. Denn bei Zuführung von Hydraulikmedium aus der Druckleitung P über die Nivellierventil-Anordnung 252 strömt dieses - eine konstante Last vorausgesetzt - ausschließlich in die Kolbenzylindereinheit 202, da sich ja bei einer konstanten Last der pneumatische Druck $p_2$ in dem lastgesteuerten Federspeicher 206 nicht ändert. Aus diesem Grund würde eine besonders einfache Möglichkeit zur Kontrolle bzw. Bestimmung der Last darin bestehen, lediglich die Länge des jeweils nach außen ragenden Abschnittes der Trennkolbenstange 262 zu bestimmen, wobei vorab einmal empirisch die jeweiligen zu den Lastwerten gehörenden Längen ermittelt werden müßten. Die Last könnte dann durch eine einfache Skala im Bereich der nach außen ragenden Trennkolbenstange 262 bestimmt werden.

Durch die erfindungsgemäße Last-Erfassungseinrichtung 276 ist es vorteilhafterweise möglich, die Last auch dann zu bestimmen, wenn das Fahrzeug über die Nivellierventil-Anordnung 252 im Niveau angehoben wurde, wodurch eigentlich ja auf den ersten Blick auf eine geringe Last geschlossen werden müßte. Ausschlaggebend ist jedoch allein die Höhe des pneumatischen Druckes $p_2$, der mittelbar über die Stellung des Trennkolbens 246 in der geschilderten Weise erfaßt werden kann.

In den Fig. 7 bis 9 sind nun Anwendungsbeispiele des erfindungsgemäßen Federungssystems für ein mehrachsiges, hier vierachsiges Fahrzeug dargestellt. Hierbei sind erfindungsgemäß jeweils zwei Kolbenzylindereinheiten 202 paarweise hydraulisch zusammengeschaltet. Insbesondere die beiden Ringräume 230 sind mit demselben, volumengesteuerten Federspeicher 204 verbunden, während die Zylinderräume 228 mit jeweils einem eigenen, lastgesteuerten Federspeicher 206 verbunden sind. Dabei sind in den dargestellten Ausführungsbeispielen die zusammengeschalteten Kolbenzylindereinheiten 202 jeweils auf der gleichen Fahrzeugseite - bezogen auf die in Fahrtrichtung angeordnete Fahrzeug-Mittelachse - angeordnet und mit jeweils einem Rad einer Fahrzeug-Doppelachse verbunden. Hierbei wirkt sich die erfindungsgemäße Ausgestaltung insofern vorteilhaft aus, als eine automatische Roll- bzw. Kippstabilisierung des Fahrzeugs erreicht wird. Normalerweise neigt sich ein Fahrzeug bei Kurvenfahrten entgegen der Kurvenrichtung nach außen. In einer Linkskurve neigt sich das Fahrzeug nach rechts und in einer Rechtskurve nach links. Durch die Erfindung wird dieser Erscheinung praktisch automatisch entgegengewirkt, da beim Einfedern der Kolbenzylindereinheiten 202 die Tragkraft F progressiv ansteigt. Dies liegt daran, daß die Kraft $F_1$ größer und die Kraft $F_2$ kleiner wird. Auf der gegenüberliegenden Fahrzeugseite, die normalerweise entlastet würde, ist dies durch die Erfindung gerade umgekehrt, so daß insgesamt ein automatischer Ausgleich der Kipp- bzw. Rollerscheinung erreicht wird. Eine analoge Wirkung wird aber vorteilhafterweise auch beim Bremsen und Beschleunigen erreicht.

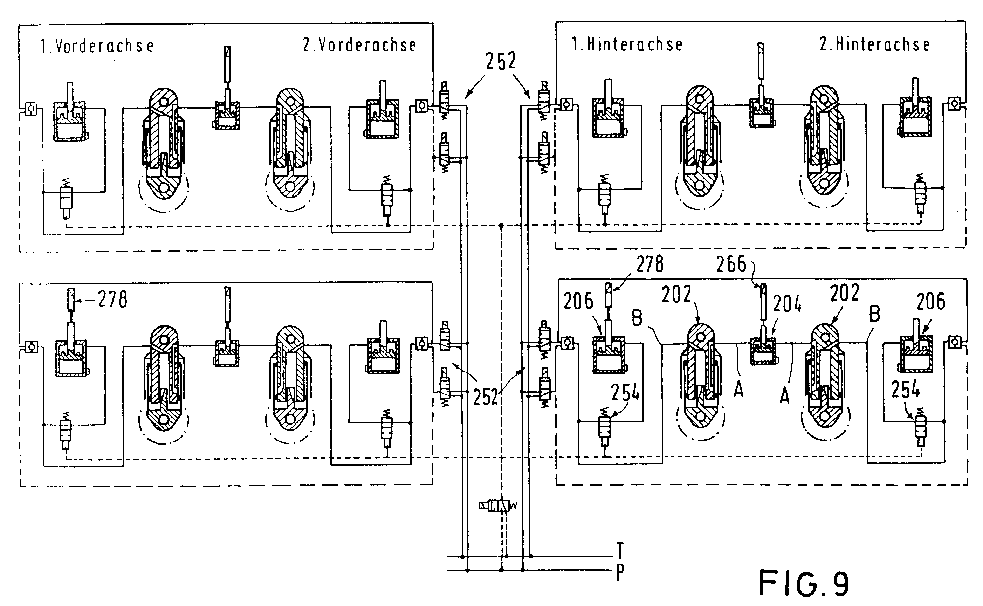

Wie oben bereits erwähnt, ist in Fig. 7 eine Ausführung mit lastabhängig verstellbaren Dämpfungsventilen 256 dargestellt, die jedoch aufgrund der Erfindung bei geeigneter Wahl der Systemgrößen auch entfallen können, wie dies in Fig. 8 und 9 erkennbar ist.

In den Ausführungen nach Fig. 7 und 8 ist jedes Rad, d.h. jede Kolbenzylindereinheit 202, gesondert für sich absenkbar und anhebbar, wozu das jeweilige Blockierventil 254 in Sperrstellung geschaltet und Hydraulikmedium über die Nivellierventil-Anordnung 252 zugeführt oder abgelassen wird.Demgegenüber ist bei der Ausführung nach Fig. 9 jedes zusammengeschaltete Paar der Kolbenzylindereinheiten 202 mit nur einer gemeinsamen Nivellierventil-Anordnung 252 ausgestattet, so daß hier einerseits das Nivellieren sowie andererseits auch das Anheben und Absenken jeweils gemeinsam erfolgt. Hierdurch vereinfacht sich die hydraulische Schaltung für solche Anwendungsfälle, in denen das Anheben und Absenken einzelner Räder bzw. Kolbenzylinderanordnungen 202 nicht gefordert wird.

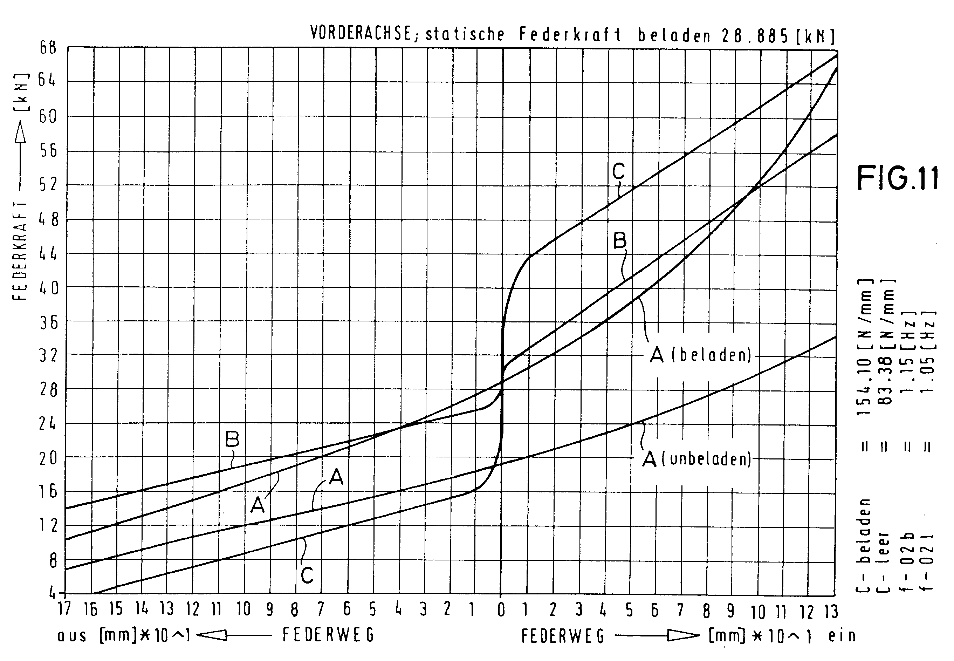

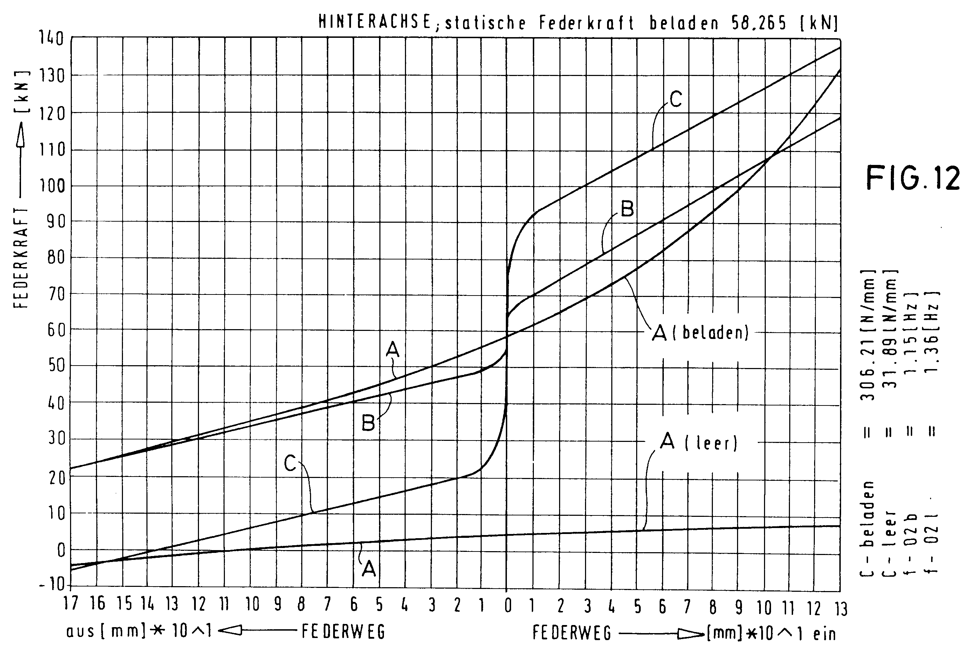

In einer in Fig. 10 in Verbindung mit Fig. 11 und 12 veranschaulichten Weiterbildung des erfindungsgemäßen Federungssystems ist zusätzlich zu dem einstellbaren Dämpfungsventil 256, welches in der Leitungsverbindung 210 zwischen dem lastgesteuerten Federspeicher 206 und der Kolbenzylindereinheit 202 angeordnet ist, auch in der Leitungsverbindung 208 zwischen der Kolbenzylindereinheit 202 und dem volumengesteuerten Federspeicher 204 ein einstellbares Dämpfungsventil 290 angeordnet. Mit diesen Dämpfungsventilen 256 und 290 kann das Federungssystem zur Stabilsierung eines Fahrzeuges z.B. bei Kurvenfahrten, beim Abbremsen und beim Beschleunigen in der folgenden Weise über einen Rechner 292 stabilisiert werden, wobei der Rechner 292 jeweils mit den Weggebern 266, 278 der Federspeicher 204, 206, mit Verstellgliedern der Dämpfungsventile 256 und 290 sowie vorzugsweise über Eingänge 294 mit nicht dargestellten Beschleunigungsaufnehmern, Lenkungsstellungsdetektoren und dergleichen Zustandssensoren verbunden ist.

Das Federungssystem verhält sich physikalisch bei einer seitlichen Neigung (Kurvenfahrt) nach dem Gesetz

$$p \cdot V = \text{Konst.,}$$

da die Neigung des Fahrzeuges relativ langsam von statten geht.

Zur Feststellung der Neigung bestehen insbesondere folgende Möglichkeiten:

a) Es werden die Wegmesser 266 an den Federspeichern 204 der Ringräume 230 in ihrem Meßergebnis verglichen.

Beispiel:    4 x 2 - Fahrzeug (4-achsig)

Alle Ringräume 230 haben einen eigenen Federspeicher 204. Zeigen die Wegmesser 266 auf einer Seite ein positives Meßergebnis (Einfederung) und auf der anderen Seite ein negatives Meßergebnis (Ausfederung), zeigt dies, daß sich das Fahrzeug nach einer Seite neigt.

b) Durch einen Beschleunigungsmesser wird die seitliche Beschleunigung (Kurvenfahrt) gemessen.

Die Stabilisierung wird wie folgt realisiert:

Der Rechner 292 wertet die Meßergebnisse aller Wegmesser 266, 278 und/oder des Beschleunigungsmessers aus. Der Rechner 292 berücksichtigt auch den Beladungszustand des Fahrzeuges. Der Beladungszustand wird durch die Weggeber 278 oder durch Druckaufnehmer an den Federspeichern 206 der Kolbenräume 228 festgestellt. Entsprechend dem Meßergebnis werden die Dämpfungsventile 256, 290 verstellt. Die Dämpfungsventile 256, 290 sind so konzipiert, daß sie - je nach Einstellung - erst bei einer mehr oder weniger großen Druckdifferenz öffnen.

Erfindungsgemäß ist ja die Tragkraft einer Kolbenzylindereinheit 202:

$$F_Z = F_K - F_R$$

| | |
|---|---|
| $F_Z$ = | Tragkraft |
| $F_K$ = | Kolbenkraft auf der Seite des Raumes 228 |
| $F_R$ = | Kolbenkraft auf der Seite des Ringraumes 230 |

$$F_K = p_K \cdot A_K; \; F_R = p_R \cdot A_R$$

| | |
|---|---|
| $p_K$ = | Druck im Zylinderraum 228 |
| $p_R$ = | Druck im Ringraum 230 |
| $A_K$ = | Kolbenfläche |
| $A_R$ = | Ringraumfläche |

Die Stabilisierung erfolgt in folgender Weise:

Für die Seite, nach der sich das Fahrzeug neigt:

A) $F_Z = [(p_K + \Delta p_{DK}) \cdot A_K] - [(p_R - \Delta p_{DR}) \cdot A_R]$

Für die gegenüberliegende Seite:

B) $F_Z = [(p_K - \Delta p_{DK}) \cdot A_K] - [(p_R + \Delta p_{DR}) \cdot A_R]$

| | |
|---|---|
| $\Delta p_{DK}$ = | Druckdifferenz im Raum 228, erzeugt durch das Dämpfungsventil |
| $\Delta p_{DR}$ = | Druckdifferenz im Ringraum 230, erzeugt durch das Dämpfungsventil |
| + $\Delta p_{DK}$ = | Druck im Zylinderraum 228 ist höher als der Druck im Federspeicher 206 |
| - $\Delta p_{DK}$ = | Druck im Federspeicher 206 ist höher als der Druck im Zylinderraum 228 |
| + $\Delta p_{DR}$ = | Druck im Ringraum 230 ist höher als der Druck in seinem Federspeicher 204 |

- $\Delta p_{DR}$ = Druck im Federspeicher 204 des Ringraums 230 ist höher als der Druck im Ringraum 230

Mit diesem Dämpfungskonzept kann auch das "Brems-Nicken" unterdrückt werden. In Abhängigkeit eines Meßsignales (Bremsdruck und Fahrgeschwindigkeit oder Beschleunigungsmessung) werden die Dämpfungsventile an der Vorderachse nach folgendes Gesetzmäßigkeit verstellt:

C) $F_Z = [(p_K + \Delta p_{DK}) \cdot A_K] - [(p_R - \Delta p_{DR}) \cdot A_R]$

An der Hinterachse nach der Gesetzmäßigkeit:

D) $F_Z = [(p_K - \Delta p_{DK}) \cdot A_K] - [(p_R + \Delta p_{DR}) \cdot A_R]$

Es muß noch darauf hingewiesen werden, daß die Druckdifferenzen $\Delta p_{DK}$ und $\Delta p_{DR}$ für die einzelnen Kolbenzylindereinheiten 202 in Abhängigkeit der einzelnen Meßergebnisse (Beladung, Wegmessung, Beschleunigungsmessung, Geschwindigkeit, Bremsdruck etc.) unterschiedlich eingestellt werden können.

Die Diagramme in Fig. 11 und 12 zeigen beispielhaft den Einfluß der verstellbaren Dämpfungsventile 256, 290. Dabei sind in Fig. 11 die Kennlinien der Vorderachse und in Fig. 12 diejenigen der Hinterachse dargestellt. Die Kurve A ist jeweils die normale Federkurve (beladen/unbeladen). Die Kurve B ist jeweils eine Dämpferdrosselung bei 10 bar. Die Kurve C ist jeweils eine Dämpferdrosselung bei 50 bar.

Wie sich aus der obigen Beschreibung ergibt, werden durch die vorliegende Erfindung gegenüber dem Stand der Technik wesentliche Vorteile erzielt. An dieser Stelle sei noch hervorgehoben, daß im Gegensatz zum Stand der Technik, wobei nur der Querschnitt der Kolbenstange für die Tragkraft der Kolbenzylindereinheit maßgebend war, nunmehr erfindungsgemäß die Tragkraft nahezu von der gesamten Kolben-Stirnfläche 240 bestimmt wird, da ja die entgegengesetzt wirkende Kraft $F_2$ sehr klein gehalten werden kann, und zwar durch die kleine Kolben-Ringfläche 242 in Verbindung mit einem kleinen Druck. Hierdurch kann die gesamte Kolbenzylindereinheit 202 sehr kompakt mit geringem Querschnitt ausgebildet werden, wobei zusätzlich von Vorteil ist, daß sich das gesamte Volumen des Hydraulikmediums im System verringern läßt.

Es sei noch erwähnt, daß in den Ausführungen nach Fig. 5 bis 10 die Kolbenzylindereinheit 202 und die Federspeicher 204 und 206 analog zu den Ausführungen nach Fig. 1 und 2 mit Endlagen-Dämpfungen ausgestattet sein können, weshalb zur Vermeidung von Wiederholungen auf die entsprechenden, obigen Erläuterungen verwiesen wird.

Die Erfindung ist nicht auf die dargestellten und beschriebenen Ausführungsbeispiele beschränkt, sondern umfaßt auch alle im Sinne der Erfindung gleichwirkenden Ausführungen. Insbesondere sind die dargestellten und beschriebenen Lösungen für die Endlagen-Stoßdämpfung nur beispielhaft. Es kann auch jede andere Konstruktion eingesetzt werden, bei der abhängig vom Weg des Kolbens bzw. des Trennkolbens eine Drosselung der Hydraulikströmung erfolgt.

Ferner ist die Erfindung auch nicht auf die Verwendung der beschriebenen und dargestellten Kolbenzylindereinheiten beschränkt. Vielmehr können beispielsweise auch solche Kolbenzylindereinheiten eingesetzt werden, die zwei ringförmig ausgebildete Zylinderräume besitzen (sogenannte "Innenrohrzylinder", wie z.B. in der DE-OS 38 39 446 beschrieben). Dabei kann auch zumindest einer der Federspeicher innerhalb der Kolbenzylindereinheit integriert angeordnet sein. Ferner können auch andere Federspeicher-Bauarten verwendet werden.

## Patentansprüche

1. Hydropneumatisches Federungssystem insbesondere für Kraftfahrzeuge, mit mindestens einer aus einem Zylinder (212) und einem in diesem beweglich geführten Kolben (214) bestehenden Kolbenzylindereinheit (202), wobei der Kolben (214) innerhalb des Zylinders (212) zwei gegensinnig volumenveränderliche Druckräume abteilt, und zwar einen lastaufnehmenden Zylinderraum (228) und einen gegenüberliegenden, eine Kolbenstange (216) umschließenden Ringraum (230), wobei die beiden Druckräume (228, 230) hydraulisch voneinander getrennt sowie mit jeweils einem separaten, ein kompressibles Medium enthaltenden Federspeicher (204, 206) verbunden sind, wobei die kompressiblen Medien in den Federspeichern (204, 206) jeweils mit einem pneumatischen Vorspanndruck ($p_1$, $p_2$) beaufschlagt sind und jeweils ein in dem jeweiligen Druckraum (228, 230) der Kolbenzylindereinheit (202) herrschender, hydraulischer Druck ($p_3$, $p_4$) gegen den entsprechenden pneumatischen Vorspanndruck ($p_1$, $p_2$) wirkt, wobei der Kolben (214) der Kolbenzylindereinheit (202) zwei gegenüberliegende Kolbenflächen (240, 242) aufweist, die jeweils mit einem der hydraulischen Drücke ($p_3$, $p_4$) beaufschlagt sind, so daß zwei gegensinnig auf den Kolben (214) wirkende Kräfte ($F_1$, $F_2$) entstehen, aus deren Differenz ($F_1$ - $F_2$) sich eine Tragkraft (F) der Kolbenzylindereinheit (202) ergibt, **dadurch gekennzeichnet,** daß der pneumatische Vorspanndruck ($p_1$ und/oder $p_2$) mindestens eines der beiden Federspeicher (204,206) mittels einer Druck-Einstelleinrichtung (274) im statischen und/oder dynamischen Betrieb derart veränderbar ist, daß hierdurch die Federkennlinie der Kolbenzylindereinheit (202) durch Abstimmung der hydraulischen Drücke ($p_3$, $p_4$) und der auf den Kolben (214) wirkenden Kräfte ($F_1$, $F_2$) variabel ist.

2. Federungssystem nach Anspruch 1,
**dadurch gekennzeichnet,** daß die pneumatischen Vorspanndrücke ($p_1$, $p_2$) der kompressiblen Medien in den beiden Federspeichern (204, 206) derart gewählt sind, daß die in den beiden Druckräumen (228, 230) herrschenden hydraulischen Drücke ($p_3$, $p_4$) unterschiedlich hoch sind.

3. Federungssystem nach Anspruch 1 oder 2,
**dadurch gekennzeichnet,** daß die Kolbenflächen des Kolbens (214) der Kolbenzylindereinheit (202) einerseits als eine von dem Druck ($p_4$) in dem lastaufnehmenden Zylinderraum (228) beaufschlagte Kolben-Stirnfläche (240) sowie andererseits eine gegenüber der Stirnfläche (240) flächenmäßig kleinere, von dem Druck ($p_3$) in dem Ringraum (230) beaufschlagte Kolben-Ringfläche (242) ausgebildet sind.

4. Federungssystem nach einem oder mehreren der Ansprüche 1 bis 3,
**dadurch gekennzeichnet,** daß einer der beiden Druckräume (228, 230) mit seinem verbundenen Federspeicher (204/206) einen geschlossenen, volumengesteuerten Hydraulik-Kreislauf (A) bildet, während der jeweils andere Druckraum (230, 228) mit seinem verbundenen Federspeicher (206/204) einen insbesondere über eine Nivellierventil-Anordnung (252) wahlweise mit einer Druckleitung (P) oder einer Tankleitung (T) eines Hydrauliksystems verbindbaren, lastgesteuerten Hydraulik-Kreislauf (B) bildet.

5. Federungssystem nach Anspruch 4,
**dadurch gekennzeichnet,** daß in einer Leitungsverbindung (210) zwischen dem Federspeicher (206) des lastgesteuerten Hydraulik-Kreislaufs (B) und dem mit der Nivellierventil-Anordnung (252) verbundenen Druckraum (228/230) ein Blockierventil (254) und/oder ein insbesondere lastabhängig einstellbares Dämpfungsventil (256) angeordnet sind/ist.

6. Federungssystem nach einem oder mehreren der Ansprüche 1 bis 5,
**dadurch gekennzeichnet,** daß vorzugsweise jeder der beiden Federspeicher (204, 206) als Kolbenspeicher mit einem in einem Zylindergehäuse (244) schwimmend geführten Trennkolben (246) ausgebildet ist, wobei der Trennkolben (246) einen hydraulisch mit dem jeweiligen Druckraum (228, 230) der Kolbenzylindereinheit (202) verbundenen Speicherraum (248) von einer mit dem kompressiblen Medium gefüllten Federkammer (250) trennt.

7. Federungssystem nach Anspruch 6,
**dadurch gekennzeichnet,** daß der Trennkolben (246) vorzugsweise jedes der beiden Federspeicher (204, 206) als Druckwandler mit zwei unterschiedlich großen, wirksamen Druckflächen (258, 260) ausgebildet ist, wobei vorzugsweise die der Federkammer (250) zugekehrte, von dem Vorspanndruck ($p_1$ bzw. $p_2$) beaufschlagte, erste Druckfläche (258) größer als die gegenüberliegende, von dem hydraulischen Druck ($p_3$ bzw. $p_4$) beaufschlagte, zweite Druckfläche (260) ist, so daß der Vorspanndruck ($p_1$ bzw. $p_2$) kleiner als der hydraulische Druck ($p_3$ bzw. $p_4$) ist.

8. Federungssystem nach Anspruch 6 oder 7,
**dadurch gekennzeichnet,** daß der Trennkolben (246) mit einer derart axial durch den Speicherraum (248) hindurch sowie abgedichtet aus dem Zylindergehäuse (244) nach außen geführten Trennkolbenstange (262) verbunden ist, daß der Speicherraum (248) einen gegenüber der Federkammer (250) reduzierten, ringförmigen Querschnitt aufweist.

9. Federungssystem nach einem oder mehreren der Ansprüche 6 bis 8,
**dadurch gekennzeichnet,** daß die Federungsbewegungen der Kolbenzylindereinheit (202) über das Hydraulikmedium mit einer insbesondere negativen Weg-Übersetzung auf den Trennkolben (246) vorzugsweise jedes der beiden Federspeicher (204, 206) übertragen werden.

10. Federungssystem nach einem oder mehreren der Ansprüche 6 bis 9,
**dadurch gekennzeichnet,** daß die Nivellierventil-Anordnung (252) zum Einstellen der Niveaulage der Kolbenzylindereinheit (202) von einem jeweiligen Istniveau auf ein vorbestimmtes Sollniveau in Abhängigkeit von der zu dem jeweiligen Istniveau proportionalen Stellung des Trennkolbens (246) des volumengesteuerten Federspeichers (204) angesteuert wird.

11. Federungssystem nach einem oder mehreren der Ansprüche 8 bis 10,
**dadurch gekennzeichnet,** daß die Trennkolbenstange (262) des volumengesteuerten Federspeichers (204) mit einem Weggeber (266) verbunden ist, und daß die Nivellierventil-Anordnung (252) anhand der Ausgangssignale des Weggebers (266) über eine Steuereinheit (268) angesteuert wird.

**12.** Federungssystem nach einem oder mehreren der Ansprüche 1 bis 11, **gekennzeichnet durch** eine Leckage-Überwachung auf Leckagen des Hydraulikmediums und/oder des kompressiblen Mediums.

**13.** Federungssystem nach Anspruch 12, **dadurch gekennzeichnet,** daß in einer Steuereinheit (268) ein maximal möglicher, von den Endlagen der Kolbenzylindereinheit (202) bestimmter Bewegungsbereich des Trennkolbens (246) des volumengesteuerten Federspeichers (204) durch zwei Soll-Grenzwerte festgelegt und die jeweilige Ist-Stellung des Trennkolbens (246) überwacht wird, wobei ein Signal erzeugt wird, wenn die Ist-Stellung außerhalb des von den Soll-Grenzwerten bestimmten Bewegungsbereichs liegt.

**14.** Federungssysten nach einem oder mehreren der Ansprüche 1 bis 13, **gekennzeichnet durch** eine die auf die Kolbenzylindereinheit (202) wirkende Last qualitativ und/oder quantitativ ermittelnde Last-Erfassungseinrichtung (276).

**15.** Federungssystem nach Anspruch 14, **dadurch gekennzeichnet,** daß die Last-Erfassungseinrichtung (276) anhand der Stellung des Trennkolbens (246) des lastgesteuerten Federspeichers (206) lastproportionale Signale (S) erzeugt, die zur optischen und/oder akustischen Anzeige und/oder zum Veranlassen bestimmter Folge-Reaktionen ausgewertet werden.

**16.** Federungssystem nach Anspruch 14 oder 15, **dadurch gekennzeichnet,** daß die Last-Erfassungseinrichtung (276) einen mit der Trennkolbenstange (262) des lastgesteuerten Federspeichers (206) verbundenen Weggeber (278) aufweist.

**17.** Federungssystem nach einem oder mehreren der Ansprüche 1 bis 16, **dadurch gekennzeichnet,** daß die Kolbenzylindereinheit (202) mit einer in Ein- und/oder Ausfederungsrichtung wirkenden, hydraulischen Endlagen-Stoßdämpfung ausgestattet ist.

**18.** Federungssystem nach einem oder mehreren der Ansprüche 6 bis 17, **dadurch gekennzeichnet,** daß der Trennkolben (246) vorzugsweise jedes der Federspeicher (204, 206) mit einer insbesondere in Ausfederungsrichtung wirkenden, hydraulischen Endlagen-Stoßdämpfung ausgestattet ist.

**19.** Federungssystem nach einem oder mehreren der Ansprüche 1 bis 18, **dadurch gekennzeichnet,** daß in einem Fahrzeug jeweils zwei Kolbenzylindereinheiten (202) paarweise hydraulisch zusammengeschaltet sind, wobei insbesondere die Ringräume (230) mit dem selben volumengesteuerten Federspeicher (204) und die Zylinderräume (228) mit jeweils einem eigenen, lastgesteuerten Federspeicher (206) verbunden sind.

**20.** Federungssystem nach Anspruch 19, **dadurch gekennzeichnet,** daß die zusammengeschalteten Kolbenzylindereinheiten (202) auf der gleichen Fahrzeugseite angeordnet und mit jeweils einem Rad einer Fahrzeug-Doppelachse verbunden sind.

**21.** Federungssystem nach Anspruch 19 oder 20, **dadurch gekennzeichnet,** daß die zusammengeschalteten Kolbenzylindereinheiten (202) unabhängig voneinander über jeweils eine Nivellierventil-Anordnung (252) oder zusammen über eine gemeinsame Nivellierventil-Anordnung (252) nivellierbar und/oder anhebbar und absenkbar sind.

**22.** Federungssystem nach einem oder mehreren der Ansprüche 1 bis 21, **dadurch gekennzeichnet,** daß in jeder der Verbindungen (208, 210) zwischen dem jeweiligen Druckraum (228, 230) und dem zugehörigen Federspeicher (204, 206) ein einstellbares Dämpfungsventil (256, 290) angeordnet ist, wobei die Dämpfungsventile (256, 290) zur Stabilisierung eines Fahrzeuges von einem Rechner (292) insbesondere anhand des Beladungszustandes sowie der bei Kurvenfahrt bzw. beim Bremsen auftretenden Fahrzeug-Neigung angesteuert werden.

**Claims**

**1.** Hydropneumatic suspension system, in particular for motor vehicles, having at least one piston-and-cylinder unit (202) which comprises a cylinder (212) and a piston (214) movably guided therein, the piston (214) dividing off within the cylinder (212) two pressurized spaces whereof the volume can be changed in opposite directions, in particular a load-absorbing cylinder space (228) and an opposing annular space (230) which surrounds a piston rod (216), the two pressurized spaces (228, 230) being separated hydraulically from one another and each being connected to a separate spring-energy store (204, 206) containing a compressible medium, the compressible media in the spring-energy stores (204, 206) each being acted upon by a pneumatic pre-tensioning pressure ($p_1$, $p_2$) and in each case a hydraulic pressure ($p_3$, $p_4$) prevailing in the respective pressurized space (228, 230) of the piston-and-cylinder unit (202) acting in opposition to the corresponding pneumatic pre-tensioning pressure ($p_1$, $p_2$), the piston (214) of the piston-and-cylinder unit (202) having two opposing piston faces (240, 242) which are each acted upon by one of the hydraulic pressures ($p_3$, $p_4$), so that two forces ($F_1$, $F_2$) acting in opposite directions on the piston (214) are produced, the difference thereof ($F_1$ - $F_2$) producing a carrying force (F) for the piston-and-cylinder unit (202), characterized in that the pneumatic pre-tensioning pressure ($p_1$ and/or $p_2$) of at least one of the two spring-energy stores (204, 206) can be altered by means of a pressure-adjusting device (274) in static and/or dynamic operation in such a way that as a result the spring characteristic of the piston-and-cylinder unit (202) is variable by matching the hydraulic pressures ($p_3$, $p_4$) and the forces ($F_1$, $F_2$) acting on the piston (214).

2. Suspension system according to Claim 1, characterized in that the pneumatic pre-tensioning pressures ($p_1$, $p_2$) of the compressible media in the two spring-energy stores (204, 206) are chosen such that the hydraulic pressures ($p_3$, $p_4$) prevailing in the two pressurized spaces (228, 230) are at different levels.

3. Suspension system according to Claim 1 or 2, characterized in that the piston faces of the piston (214) of the piston-and-cylinder unit (202) are constructed on the one hand as a piston end face (240) which is acted upon by the pressure ($p_4$) in the load-absorbing cylinder space (228), and on the other hand as a piston annular face (242) which is smaller in surface area than the end face (240) and is acted upon by the pressure ($p_3$) in the annular space (230).

4. Suspension system according to one or more of Claims 1 to 3, characterized in that one of the two pressurized spaces (228, 230) forms, with its connected spring-energy store (204/206), a closed, volume-controlled hydraulic circuit (A), while the respectively other pressurized space (230, 228) forms, with its connected spring-energy store (206/204), a load-controlled hydraulic circuit (B) which, in particular by way of a levelling-valve arrangement (252), can be connected selectively to a pressurized line (P) or a top-up line (T) of a hydraulic system.

5. Suspension system according to Claim 4, characterized in that a blocking valve (254) and/or a damping valve (256) which is in particular adjustable in dependence on load, is/are arranged in a line connection (210) between the spring-energy store (206) of the load-controlled hydraulic circuit (B) and the pressurized space (228/230) connected to the levelling-valve arrangement (252).

6. Suspension system according to one or more of Claims 1 to 5, characterized in that preferably each of the two spring-energy stores (204, 206) is constructed as a piston store having a separating piston (246) guided floating in a cylinder housing (244), the separating piston (246) separating a store space (248) which is connected hydraulically to the respective pressurized space (228, 230) of the piston-and-cylinder unit (202) from a spring chamber (250) filled with the compressible medium.

7. Suspension system according to Claim 6, characterized in that the separating piston (246) preferably of each of the spring-energy stores (204, 206) is constructed as a pressure transducer having two active pressure faces (258, 260) of different sizes, preferably the first pressure face (258), which faces the spring chamber (250) and is acted upon by the pre-tensioning pressure ($p_1$ or $p_2$ respectively), being larger than the opposing second pressure face (260), which is acted upon by the hydraulic pressure ($p_3$ or $p_4$ respectively), so that the pre-tensioning pressure ($p_1$ or $p_2$ respectively) is smaller than the hydraulic pressure ($p_3$ or $p_4$ respectively).

8. Suspension system according to Claim 6 or 7, characterized in that the separating piston (246) is connected to a separating piston rod (262) which is guided axially through the store space (248) and in sealed manner outwardly out of the cylinder housing (244) in such a way that the store space (248) has an annular cross-section which is reduced by comparison with the spring chamber (250).

9. Suspension system according to one or more of Claims 6 to 8, characterized in that the suspension movements of the piston-and-cylinder unit (202) are transmitted by way of the hydraulic medium to the separating piston (246) preferably of each of the two spring-energy stores (204, 206), with a path transmission which is in particular negative.

10. Suspension system according to one or more of Claims 6 to 9, characterized in that the levelling-valve arrangement (252) for adjusting the level position of the piston-and-cylinder unit (202) from a respective actual level to a predetermined set level is controlled as a function of the position, proportional to the respective actual level, of the separating piston (246) of the volume-controlled spring-energy store (204).

11. Suspension system according to one or more of Claims 8 to 10, characterized in that the separating piston rod (262) of the volume-controlled spring-energy store (204) is connected to a position encoder (266), and in that the levelling-valve arrangement (252) is controlled with reference to the output signals of the position encoder (266) by way of a control unit (268).

12. Suspension system according to one or more of Claims 1 to 11, characterized by a leak monitoring device for leaks of the hydraulic medium and/or of the compressible medium.

13. Suspension system according to Claim 12, characterized in that a maximum possible movement range of the separating piston (246) of the volume-controlled spring-energy store (204), determined by the limit position of the piston-and-cylinder unit (202), is established in a control unit (268) by two set limit values and the respective actual position of the separating piston (246) is monitored, a signal being generated when the actual position lies outside the movement range determined by the set limit values.

14. Suspension system according to one or more of Claims 1 to 13, characterized by a load-detecting device (276) determining qualitatively and/or quantitatively the load acting on the piston-and-cylinder unit (202).

15. Suspension system according to Claim 14, characterized in that the load-detecting device (276) generates, with reference to the position of the separating piston (246) of the load-controlled spring-energy store (206), load-proportional signals (S) which are evaluated to give the optical and/or acoustic display and/or to cause certain consequent reactions.

16. Suspension system according to Claim 14 or 15, characterized in that the load-detecting device (276) has a position encoder (278) which is connected to the separating piston rod (262) of the load-controlled spring-energy store (206).

17. Suspension system according to one or more of Claims 1 to 16, characterized in that the piston-and-cylinder unit (202) is equipped with a hydraulic limit position shock absorption means acting in the direction of contracting and/or extending deflection.

18. Suspension system according to one or more of Claims 6 to 17, characterized in that the separating piston (246) preferably of each of the spring-energy stores (204, 206) is equipped with a hydraulic limit position shock absorption means acting in particular in the direction of extending deflection.

19. Suspension system according to one or more of Claims 1 to 18, characterized in that in a vehicle in each case two piston-and-cylinder units (202) are connected together hydraulically in pairs, in each case in particular the annular spaces (230) being connected to the same volume-controlled spring-energy store (204) and the cylinder spaces (228) being connected in each case to a separate load-controlled spring-energy store (206).

20. Suspension system according to Claim 19, characterized in that the piston-and-cylinder units (202) which are connected together are arranged on the same side of the vehicle and are connected in each case to a wheel of a vehicle twin axle.

21. Suspension system according to Claim 19 or 20, characterized in that the piston-and-cylinder units (202) which are connected to one another can be made level and/or can be raised and lowered independently of one another by way of in each case a levelling-valve arrangement (252) or together by way of a common levelling-valve arrangement (252).

22. Suspension system according to one or more of Claims 1 to 21, characterized in that in each of the connections (208, 210) between the respective pressurized space (228, 230) and the associated spring-energy store (204, 206) there is arranged an adjustable damping valve (256, 290), the damping valves (256, 290) being controlled by a computer (292), in particular with reference to the loading condition and the vehicle inclination occurring on cornering or on braking, for the purpose of stabilizing a vehicle.

## Revendications

1. Système de suspension hydropneumatique, en particulier pour véhicules à moteur, comportant au moins un ensemble piston-cylindre (202) consistant en un cylindre (212) et un piston (214) mobile dans celui-ci, ledit piston (214) séparant à l'intérieur du cylindre (212) deux chambres pour agent de pression dont le volume peut être modifié en sens inverse l'un de l'autre, à savoir une chambre de cylindre (228) recevant la charge et une chambre annulaire (230) en regard entourant une tige de piston (216), les deux chambres pour agent de pression (228, 230) étant hydrauliquement séparées entre elles et respectivement reliées à un ressort pneumatique (204, 206) distinct contenant un agent compressible, les agents compressibles des ressorts pneumatiques (204, 206) étant respectivement chargés d'une pression pneumatique de précontrainte ($p_1$, $p_2$), une pression hydraulique ($p_3$, $p_4$) régnant dans la chambre pour agent de pression respective (228, 230) de l'ensemble piston-cylindre (202), s'opposant à la pression pneumatique respective de précontrainte ($p_1$, $p_2$), le piston (214) de l'ensemble piston-cylindre (202) présentant deux surfaces en regard (240, 242) sur lesquelles agit respectivement une des pressions hydrauliques ($p_3$, $p_4$), de manière à engendrer deux forces ($F_1$, $F_2$) agissant en sens contraire sur le piston (214) et dont la différence ($F_1$ - $F_2$) produit une force de support (F) de l'ensemble piston-cylindre (202), caractérisé par le fait que la pression pneumatique de précontrainte ($p_1$ et/ou $p_2$) d'au moins un des deux ressorts pneumatiques (204, 206) peut être modifiée, au moyen d'un dispositif de réglage de la pression (274), au cours d'un fonctionnement statique et/ou dynamique, de manière à ce que la courbe caractéristique de l'élasticité de l'ensemble piston-cylindre (202) puisse être variée en accordant les pressions hydrauliques ($p_3$, $p_4$) et les forces ($F_1$, $F_2$) agissant sur le piston (214).

2. Système de suspension selon la revendication 1, caractérisé en ce que les pressions pneumatiques de précontrainte ($p_1$, $p_2$) des agents compressibles contenus dans les deux ressorts pneumatiques (204, 206) sont choisies de manière à ce que les pressions hydrauliques ($p_3$, $p_4$) régnant dans les deux chambres pour agent de pression (228, 230) n'aient pas la même valeur.

3. Système de suspension selon la revendication 1 ou 2, caractérisé en ce que les surfaces du piston (214) de l'ensemble piston-cylindre (202) ont d'une part, la forme d'une face frontale (240) sur laquelle agit la pression ($p_4$) de la chambre de cylindre (228) qui reçoit la charge, et d'autre part, d'une surface annulaire (242) de dimensions plus réduites que la face frontale (240) et soumise à l'action de la pression ($p_3$) de la chambre annulaire (230).

4. Système de suspension selon l'une ou plusieurs des revendications 1 à 3, caractérisé en ce que l'une des deux chambres pour agent sous pression (228, 230) forme, avec le ressort pneumatique (204, 206) auquel elle est reliée, un circuit hydraulique fermé (A) à volume réglable, tandis que l'autre respectivement des chambres pour agent de pression (230, 228) forme avec le ressort pneumatique (206, 204) auquel elle est reliée un circuit hydraulique (B) actionné en fonction de la charge, pouvant être relié sélectivement, par l'intermédiaire d'un agencement comportant un distributeur d'équilibrage (252), à une conduite de pression (P) ou à une conduite menant au réservoir (T) d'un système hydraulique.

5. Système de suspension selon la revendication 4, caractérisé en ce que, dans une conduite (210) reliant le ressort pneumatique (206) du circuit hydraulique (B) actionné en fonction de la charge, et la chambre pour agent de pression (228, 230) reliée à l'agencement à distributeur d'équilibrage (252), est disposée une vanne d'arrêt (254) et/ou une vanne d'amortissement (256) pouvant en particulier être réglée en fonction de la charge.

6. Système de suspension selon l'une ou plusieurs des revendications 1 à 5, caractérisé par le fait que, de préférence, chacun des deux ressorts pneumatiques (204, 206) a la forme d'un réservoir-piston muni d'un piston de séparation (246) flottant dans une enveloppe cylindrique (244), le piston de séparation (246) séparant hydrauliquement une chambre-réservoir (248), reliée hydrauliquement à la chambre pour agent de pression respective (228, 230) de l'ensemble piston-cylindre (202) d'une chambre de suspension (250) remplie d'un agent compressible.

**7.** Système de suspension selon la revendication 6,
caractérisé en ce que le piston de séparation (246), de préférence de chacun des deux ressorts accumulateurs (204, 206) a la forme d'un convertisseur de pression muni de deux surfaces (258, 260) de taille différente, soumises à une pression effective, la première surface (258) en regard de la chambre de suspension (250) et soumise à l'action de la pression de précontrainte ($p_1$, respectivement $p_2$) étant de préférence plus grande que la deuxième surface (260) en regard, soumise à la pression hydraulique ($p_3$ respectivement $p_4$), la pression de précontrainte ($p_1$, respectivement $p_2$) étant ainsi inférieure à la pression hydraulique ($p_3$, respectivement $p_4$).

**8.** Système de suspension selon la revendication 6 ou 7,
caractérisé en ce que le piston de séparation (246) est relié à une tige (262) guidée axialement à travers le réservoir (248) et avec étanchéité vers l'extérieur de l'enveloppe cylindrique (244), le réservoir (248) ayant une section annulaire réduite par rapport à la chambre de suspension (250).

**9.** Système de suspension selon l'une ou plusieurs des revendications 6 à 8,
caractérisé en ce que les mouvements de suspension de l'ensemble piston-cylindre (202) sont transmis, en particulier avec un rapport de transmission négatif, au piston de séparation (246) de chacun, de préférence, des deux ressorts pneumatiques (204, 206) par l'intermédiaire de l'agent hydraulique.

**10.** Système de suspension selon l'une ou plusieurs des revendications 6 à 9,
caractérisé en ce que l'agencement comprenant un distributeur d'équilibrage (252) pour le réglage de la position de l'ensemble piston-cylindre (202) à partir d'un niveau effectif instantané relativement à un niveau de référence déterminé est commandé en fonction de la position du piston de séparation (246) du ressort pneumatique (204) à volume réglable, ladite position étant proportionnelle au niveau effectif instantané.

**11.** Système de suspension selon l'une ou plusieurs des revendications 8 à 10,
caractérisé en ce que la tige (262) du piston de séparation du ressort pneumatique (204) à volume réglable est reliée à un indicateur de parcours (266) et que l'agencement à soupape d'égalisation (252) est commandé à l'aide des signaux de sortie d'un capteur de déplacement (266) au moyen d'un dispositif de commande (268).

**12.** Système de suspension selon l'une ou plusieurs des revendications 1 à 11,
caractérisé par un dispositif de surveillance de fuites de l'agent hydraulique et/ou de l'agent compressible.

**13.** Système de suspension selon la revendication 12,
caractérisé en ce que, dans un système de commande (268), une zone de déplacement maximal possible du piston de séparation (246) du ressort pneumatique (204) à volume réglable, déterminée par les positions extrêmes de l'ensemble piston-cylindre (202), est fixée par deux valeurs limites de référence, et que la position effective instantanée du piston de séparation (246) est surveillée, un signal étant engendré lorsque la position effective se situe en dehors de la zone de déplacement déterminée par les valeurs limites de référence.

**14.** Système de suspension selon l'une ou plusieurs des revendications 1 à 13,
caractérisé par un dispositif (276) de détection qualitative et/ou quantative de la charge, agissant sur l'ensemble piston-cylindre (202).

**15.** Système de suspension selon la revendication 14,
caractérisé en ce que le dispositif de détection de la charge (276) en fonction de la position du piston de séparation (246) du ressort pneumatique (206) actionné en fonction de la charge engendre des signaux (S) proportionnels à la charge, qui sont exploités pour un avertissement optique et/ou acoustique et/ou pour engendrer certaines réactions consécutives.

**16.** Système de suspension selon la revendication 14 ou 15,
caractérisé en ce que le dispositif de détection de la charge (276) comporte un capteur de déplacement (278) relié à la tige (262) du piston de séparation du ressort pneumatique (206) actionné en fonction de la charge.

**17.** Système de suspension selon l'une ou plusieurs des revendications 1 à 16,
caractérisé en ce que l'ensemble piston-cylindre (202) est muni d'un moyen d'amortissement hydraulique, agissant en positions extrêmes dans la direction de compression et/ou de détente du ressort.

**18.** Système de suspension selon l'une ou plusieurs des revendications 6 à 17, caractérisé en ce que le piston de séparation (246), de préférence de chacun des ressorts pneumatiques (204, 206) est muni d'un moyen d'amortissement hydraulique agissant en positions extrêmes, en particulier dans la direction de détente du ressort.

**19.** Système de suspension selon l'une ou plusieurs des revendications 1 à 18, caractérisé en ce que, dans un véhicule, respectivement deux ensembles piston-cylindre (202) sont interconnectés hydrauliquement, les chambres annulaires (230) étant en particulier reliées au même ressort pneumatique (204) à volume réglable et les chambres de cylindre (228) étant respectivement reliées à un ressort pneumatique propre (206) actionné en fonction de la charge.

**20.** Système de suspension selon la revendication 19, caractérisé en ce que les ensembles piston-cylindre (202) interconnectés sont disposés du même côté dans le véhicule et respectivement reliés à une roue d'un axe double du véhicule.

**21.** Système de suspension selon la revendication 19 ou 20, caractérisé en ce que les ensembles piston-cylindre (202) interconnectés peuvent être équilibrés et/ou levés et abaissés indépendamment l'un de l'autre au moyen d'un agencement contenant un distributeur d'équilibrage (252) ou bien ensemble par un agencement commun à distributeur d'équilibrage (252).

**22.** Système de suspension selon l'une ou plusieurs des revendications 1 à 21, caractérisé en ce que, dans chacune des connexions (208, 210) entre la chambre respective (228, 230) pour agent de presion et le ressort pneumatique associé (204, 206) est disposé une vanne d'amortissement réglable (256, 290), les vannes d'amortissement (256, 290) étant commandées, pour stabiliser un véhicule, par un ordinateur (292), en particulier en fonction de la charge du véhicule ou de son inclinaison lors d'un parcours en virage ou d'un freinage.

FIG.1

FIG.2

FIG.3

FIG.4

FIG.5

FIG.6

1. Vorderachse    2. Vorderachse    1. Hinterachse    2. Hinterachse

FIG.7

EP 0 425 885 B1

2.Hinterachse 1.Hinterachse 2.Vorderachse 1.Vorderachse

278 252 206 254 B 202 266 204 A 202 B 278 206 254 252

P T

**FIG.8**

30

FIG.9

FIG.10

FIG.11

VORDERACHSE; statische Federkraft beladen 28.885 [kN]

f-02l = 1.05 [Hz]
f-02b = 1.15 [Hz]
C-leer = 83.38 [N/mm]
C-beladen = 154.10 [N/mm]

FIG.12

f - 02I · = 1.36 [Hz]
f - 02b = 1.15 [Hz]
C - leer = 31.891 [N/mm]
C - beladen = 306.21 [N/mm]

HINTERACHSE, statische Federkraft beladen 58.265 [kN]

C

B

A (beladen)

A (leer)

A

B

C

A

FEDERWEG ⟶ [mm] *10^1 ein

FEDERWEG ⟵ [mm] *10^1

aus [mm] *10^1 ⟵

FEDERKRAFT [kN] ⟶

140 130 120 110 100 90 80 70 60 50 40 30 20 10 0 -10

17 16 15 14 13 12 11 10 9 8 7 6 5 4 3 2 1 0 1 2 3 4 5 6 7 8 9 10 11 12 13